(19) 

**Europäisches Patentamt**
**European Patent Office**
**Office européen des brevets**

(11) **EP 1 716 680 B1**

(12) **EUROPEAN PATENT SPECIFICATION**

(45) Date of publication and mention
of the grant of the patent:
**27.08.2008 Bulletin 2008/35**

(21) Application number: **04712534.9**

(22) Date of filing: **19.02.2004**

(51) Int Cl.:
*H04L 25/02* (2006.01)     *H04L 27/26* (2006.01)

(86) International application number:
**PCT/EP2004/001645**

(87) International publication number:
**WO 2005/081481 (01.09.2005 Gazette 2005/35)**

(54) **CHANNEL ESTIMATOR AND METHOD FOR ESTIMATING A CHANNEL TRANSFER FUNCTION AND APPARATUS AND METHOD FOR PROVIDING PILOT SEQUENCES**

KANALSCHÄTZER UND VERFAHREN ZUR SCHÄTZUNG EINER KANALÜBERTRAGUNGSFUNKTION SOWIE VORRICHTUNG UND VERFAHREN ZUR ERZEUGUNG VON PILOTSEQUENZEN

EVALUATEUR DE VOIE ET PROCEDE D'EVALUATION D'UNE FONCTION DE TRANSFERT DE VOIE, APPAREIL ET PROCEDE DE GENERATION DE SEQUENCES PILOTES

(84) Designated Contracting States:
**DE GB**

(43) Date of publication of application:
**02.11.2006 Bulletin 2006/44**

(73) Proprietor: **NTT DoCoMo INC.**
**Chiyoda-ku**
**Tokyo**
**100-6150 (JP)**

(72) Inventor: **AUER, Gunther**
**80339 Munich (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**US-A1- 2002 034 161     US-A1- 2002 118 771**

EP 1 716 680 B1

**Description**

The present invention is in the field of telecommunications and, in particular, in the field of channel estimation in a multiple input scenario, in which a receiver receives signals from more than one transmit antenna.

The steadily-increasing demand for high data rates necessary for today's and future mobile radio applications requires high data rate transmission techniques efficiently exploiting the available bandwidth or, in other words, the achievable channel capacity. Therefore, multiple input multiple output (MIMO) transmission systems have achieved considerable importance in recent years. MIMO systems employ a plurality of transmitting points, each of the transmitting points having a transmit antenna, and a plurality of receiving points, each of the receiving points having a receiving antenna, to receive signals being transmitted by the multiple transmitting points through different communication channels. An important subset of MIMO systems are multiple input single output (MISO) systems, employing a plurality of transmitting points and a single receiving point receiving signals being transmitted by the multiple transmitting points through different communication channels extending from a respective transmitting point to the (common) receiving point.

MIMO systems, i.e. systems employing several transmit and receive antennas, may be used to improve capacity of mobile communication systems. Among a plurality of MIMO transmission techniques, cyclic delay diversity technique (CDD) is a promising candidate for the future communication systems. CDD is a transmit antenna diversity scheme where multiple transmit antennas transmit delayed versions of the same signal, as is described in A. Dammann and S. Kaiser, "Standard Comfortable Antenna Diversity Techniques for OFDM and its Application to the DVB-T System", in Proc. IEEE Global Telecommunication Conference (GLOBECOM 2001), San Antonio, USA, pp. 3100-3105, Nov. 2001. More specifically, CDD technique transforms a MIMO channel into an equivalent single input multiple output (SIMO) channel with increased frequency selectivity, i.e. the spatial diversity is transformed into frequency diversity, wherein each version of the origin signal is delayed by an antenna specific delay which a design parameter.

Cyclic delay diversity technique is preferably used in multicarrier transmission scenarios, like for example OFDM (orthogonal frequency division multiplexing), since, if a cyclic delay is inserted, inter-symbol interference (ISI) can be avoided, so that, for example, an orthogonality of the OFDM scheme is maintained. Since an outer channel decoder, for example a trellis decoder, can exploit the diversity of the frequency selective channel, CDD can be considered as being an additional source of diversity.

Multi-carrier modulation, in particular orthogonal frequency division multiplexing (OFDM), has been successfully applied to a wide variety of digital communication systems. OFDM was first introduced in the 1960s. Efficiently, OFDM modulation techniques can be utilized using the discrete Fourier transform (DFT). By inserting a cyclic prefix into the guard interval (GI) longer than the maximum delay of the communication channel, inter-symbol interference (ISI) can be eliminated completely and the orthogonality of the received signal is preserved. Since future mobile communication systems should support data rates several times higher than current systems, multi-carrier systems with proper coding and interleaving offer both, efficient implementation through the application of the fast Fourier transform (FFT) providing a spectral representation of the received signal, and sufficient robustness to radio channel impairments.

In another OFDM-based approach, termed multi-carrier CDMA (MC-CDMA, multi-carrier code division multiplexing), where spreading in frequency and/or time direction is introduced in addition to the OFDM modulation. MC-CDMA has been deemed a promising candidate for the downlink of 4G systems as is described in S. Abeta, H. Atarashi, and M. Sawahashi, "Performance of Coherent Multi-Carrier/DS-CDMA and MC-CDMA for Broadband Packet Wireless Access," IEICE Transactions on Communications, vol. E84-B, pp. 406-414, Mar. 2001.Moreover, in H. Atarashi and M. Sawahashi, "Variable Spreading Factor Orthogonal Frequency and Code Division Multiplexing (VSF-OFCDM)," in 3rd International Workshop on Multi-Carrier Spread, Spectrum, & Related Topics (MC-SS 2001), Oberpfaffenhofen, Germany, Sep. 2001, a MC-CDMA system using a variable spreading factor, namely variable spreading factor of orthogonal frequency and code division multiple access (VSF-OFCDM) for the downlink of a 4G air interface is described.

Systems employing multiple transmit and receive antennas (MIMO) can be used with OFDM in order to improve the communication capacity and quality of mobile radio systems. For OFDM systems with multiple transmit antennas, such as space-time codes as described in A. Naguib, N. Seshadri, and A. Calderbank, "Space Time Coding and Signal Processing for High Data Rate Wireless Communication," IEEE Signal Processing Magazine, pp. 76-92, May 2000 or spatial multiplexing, different signals are transmitted form different transmit antennas simultaneously. In A. Wittneben, "A New Bandwidth Efficient Transmit Antenna Modulation Diversity Scheme for Linear Digital Modulation," in Proc. IEEE Int. Conference on Communications (ICC' 93), Geneva Switzerland, pp. 1630-1634, May 1993, a low complexity transmit delay diversity scheme is described, where different antennas transmit delayed versions of the data stream. This means that artificial inter-symbol interference (ISI) is created. If an equalizer is employed at the receiver for equalizing, which is often required for mobile communication systems, diversity can be exploited, if the signals from different transmit antennas comprised by different transmitting points are uncorrelated.

The original transmit diversity scheme as it is described in the above-mentioned document can be applied to OFDM, termed cyclic delay diversity (CDD). By exploiting the property that a DFT (discrete Fourier transform) translates cyclic shifts to phase shifts, cyclic delay diversity can be provided without introducing ISI. This provides a transmitter structure having low complexity, while a conventional OFDM receiver is retained. This implies that CDD can be incorporated in existing standards, such as the wireless LAN (local area network) standard, 802.11a and HIPERLAN/2 standard or the digital broadcasting standard DVB-T without changing the standards specifications. Unfortunately, as CDD makes the channel more frequency selective, a standard channel estimator may experience a large estimation error partly compensating the achieved diversity gain. Especially for large cyclic delays, which appear to achieve favourable performance for CDD-OFDM with perfect channel knowledge, the frequency selectivity of the observed channel is very severe.

One of the main advantages of CDD-OFDM is that receiver remains unaffected, i.e. the same receiver structure, for example a single antenna OFDM system, can be used.

However, the use of CDD which is a coherent transmission technique in wireless systems requires tracking of the mobile radio channel which is known as a channel estimation. For example, transmitting an OFDM signal over a multipath fading channel, the received signal will have unknown amplitude and phase variations. For coherent transmission, these amplitude and phase variations should be estimated by applying channel estimation techniques.

The more frequency selective a channel is, the better a coded OFDM system will perform. As has been mentioned above, CDD transforms a multiple input channel into an equivalent single input (single antenna) channel with increased frequency selectivity. For example OFDM with CDD it was found by G. Bauch and J. S. Malik, "Parameter Optimization, Interleaving and Multiple Access in OFDM with Cyclic Delay Diversity," to be published in Vehicular Technology Conference (VTC-spring 2004), Milan, Italy, Apr. 2004, that the cyclic delay should be as large as possible. However, transmitting over frequency selective communication channel requires efficient channel estimation techniques providing precise channel estimates describing the frequency selective behaviour of the communication channel. The frequency behaviour of the communication channel is usually described by its channel transfer function, which is a spectral representation of a channel impulse response.

Usually, channel estimation is performed on a basis of pilot sequences (pilot symbols) being transmitted from a transmitter to a receiver, so that a communication channel or a plurality of communication channels can be estimated by exploiting the (known) pilot sequences and received versions thereof. At the receiver, the (known) pilot symbols and received versions thereof are evaluated in order to obtain an estimate of e.g. a channel transfer function, which is important for OFDM systems. For pilot symbol aided channel estimation (PACE), the OFDM-based systems, including MC-CDMA, can employ exactly the same algorithms to estimate the channel impulse response. Thus, for the sake of the descriptional simplicity, in the following reference is made to OFDM systems by the way of example only. An extension to other OFDM-based systems is straightforward.

M. Speth discloses in LMMSE channel estimation for MIMO OFDM, OFDM workshop, Hamburg, 2003, a LMMSE channel estimation scheme for MIMO OFDM. The MIMO OFDM system comprises Q transmitting and P receiving antennas, wherein the transmitting antennas transmit different training symbols which are orthogonal to each other. In order to estimate the channel coefficients, a linear estimator filter is used, wherein the linear estimator filter is obtained by solving a Wiener-Hopf equation.

However, the channel estimation becomes more difficult with increasing frequency selectivity of a communication channel to be estimated since the channel transfer function has to be sampled at many frequency points. Since CDD-OFDM makes the channel become more frequency selective, the achievable performance gain will be limited due to poor channel estimation associated with poor channel estimates.

Since the CDD transmission technique is a new research field, the channel estimation problem especially for CDD transmission systems has not been solved yet.

The prior art approaches referring to channel estimation for CDD assume either that the channel is perfectly known, which implies a perfect knowledge of the coefficients of the channel input response, or channel estimation is performed using conventional single input single output (SISO) channel estimators, i.e. estimators which are used in a single antenna system. However, this channel estimation approach provides satisfactory results only for small cyclic delays. As is derived in G. Bauch and J. S. Malik, "Parameter Optimization, Interleaving and Multiple Access in OFDM with Cyclic Delay Diversity," to be published in Vehicular Technology Conference (VTC-spring 2004), Milan, Italy, Apr. 2004, the cyclic delay should be as large as possible in order to fully exploit the channel frequency selectivity provided by the CDD.

In the following, the CDD-OFDM approach will be described n detail.

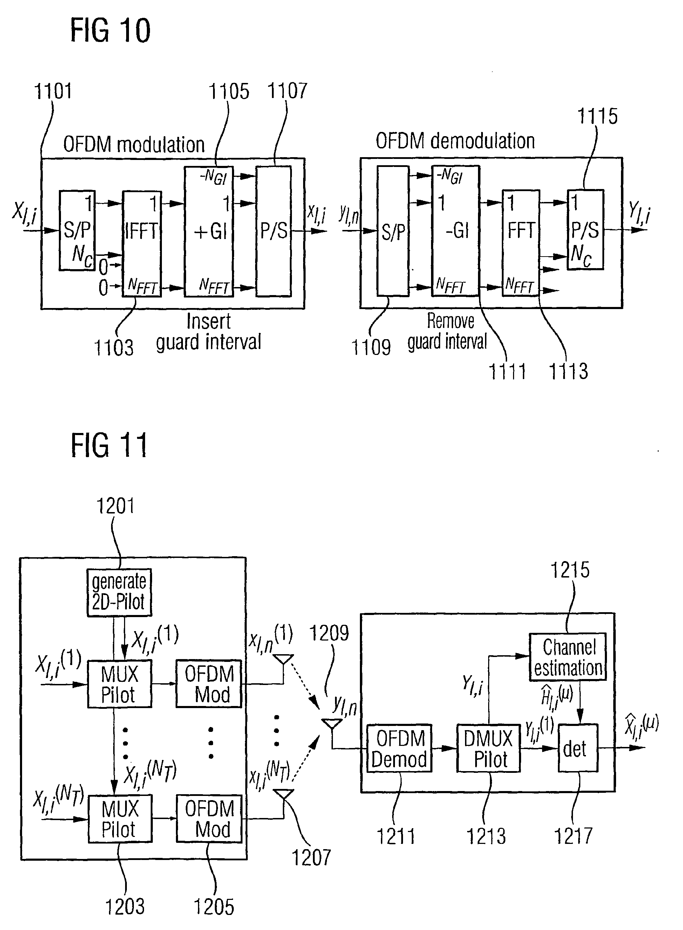

Fig. 10 shows a block diagram of an OFDM modulator (left hand side) and an OFDM demodulator (right hand side), respectively.

The OFDM modulator comprises a serial to parallel converter 1101 (S/P) having $N_c$ outputs coupled to a IFFT-transformer 1103 (IFFT = inverse fast Fourier transform). The IFFT-transformer 1103 has $N_{FFT}$ outputs coupled to a guard interval insertion block 1105 (GI = guard interval). The guard interval insertion block 1105 has a plurality of outputs coupled to a parallel to serial converter 1107 (P/S) having an output for providing a transmit signal.

The OFDM demodulator shown on the right hand side of Fig. 10 has a structure which is inverse to that of the OFDM modulator. In particular, the OFDM demodulator comprises a serial to parallel converter 1109 having an input and a plurality of outputs coupled to a guard interval removal block 1111. The guard interval removal block 1111 has a plurality of outputs coupled to a FFT-transformer 1113 having $N_{FFT}$ inputs and a plurality of outputs, wherein $N_c$ outputs of the FFT transformer 1113 are coupled to a P/S-converter 1115 having an output for providing a received signal.

For the considered OFDM-based MIMO system, one OFDM modulator is employed for each transmit antenna, while OFDM demodulation is performed independently for each receive antenna. For OFDM, the signal stream is divided into $N_c$ parallel substreams, typically for any multi-carrier modulation scheme. The $i^{th}$ substream, commonly termed sub-carrier, of the $l^{th}$ symbol block, named OFDM symbol, is denoted by $X_{l,i}$. An inverse DFT with $N_{FFT}$ points is performed on each block, and subsequently the guard interval having $N_{GI}$ samples is inserted to obtain $x_{l,n}$. After digital to analog conversion (D/A), the signal x(t) is transmitted over a mobile radio channel having an impulse response h(t,τ).

Fig. 11 shows a block diagram of a multiple input single output (MISO) OFDM system for channel estimation.

The transmitter shown on the left hand side of Fig. 11 comprises a block 1201 for generating two-dimensional (2D) pilot sequences for estimating the communication channels in frequency and in time direction. Additionally, the transmitter comprises a plurality of multiplexers 1203 for inserting the pilot sequences into data streams to be transmitted and a plurality of OFDM modulators 1205 for modulating the resulting signals, wherein each of the OFDM modulators is coupled to a respective transmit antenna 1207 for transmitting the modulated signals through a plurality of communication channels to a receiver shown on the right hand side of Fig. 11.

The receiver comprises a receive antenna 1209 coupled to an OFDM demodulator 1211. An output of the OFDM demodulator 1211 is coupled to a demultiplexer 1213 (DMUX) for demultiplexing the received versions of the pilot sequences. The demultiplexer 1213 is coupled to a channel estimator 1215 for channel estimation and to a detection block 1217, for example an equalizer, for providing a received data stream.

In the context of channel estimation for systems employing several transmit antennas, reference is usually made to multiple input single output systems, i.e. systems employing one receive antenna. As far as channel estimation is concerned, an extension to MIMO systems is straight forward since channel estimation is performed at each receive antenna branch independently. For this reason, in the following MISO systems will be considered.

Generally, each transmit antenna transmits an independent data stream propagating through a communication channel, which is denoted by $x^{(\mu)}(t)$ and $h^{(\mu)}(t,\tau)$, wherein μ denotes a transmit antenna index. At the receiver, these signals are superimposed.

Assuming perfect synchronization, a received signal of an equivalent bass band system at sampling instants $t = [n + \ell N_{sym}]T_{spl}$ is in the form

$$Y_{\ell,n} \stackrel{\Delta}{=} y([n + \ell N_{sym}]T_{spl}) = \sum_{\mu=1}^{N_T} \int_{-\infty}^{\infty} h^{(\mu)}(t, \tau) \cdot x^{(\mu)}(t - \tau)d\tau + n(t)\Big|_{t=[n+\ell N_{sym}]T_{spl}}$$

where $N_T$ denotes a total number of transmit antennas, $x^{(\mu)}(t)$ denotes a transmitted signal of transmit antenna μ after OFDM modulation, n(t) represents additive Gaussian noise, and $N_{sym} = N_{FFT} + N_{GI}$ accounts for the number of samples per OFDM symbol. At the receiver, guard interval is removed and the information is recovered by performing a DFT on the received block of signal samples to obtain an input of the OFDM demodulation $Y_{\ell,i}$. The received signal after OFDM demodulation is given by

$$Y_{\ell,i} = \sum_{\mu=1}^{N_T} X_{\ell,i}^{(\mu)} H_{\ell,i}^{(\mu)} + N_{\ell,i}$$

where $X_{\ell,i}^{(\mu)}$ and $H_{\ell,i}^{(\mu)}$ denote the transmitted information symbol and the channel transfer function (CTF) of transmit antenna μ at sub-carrier i of the $l^{th}$ OFDM symbol, respectively. The term $N_{1,i}$ accounts for additive white Gaussian noise (AWGN) with zero mean and variance No. It is assumed in the following, that the transmitted signals consist of L OFDM symbols, each having $N_c$ sub-carriers.

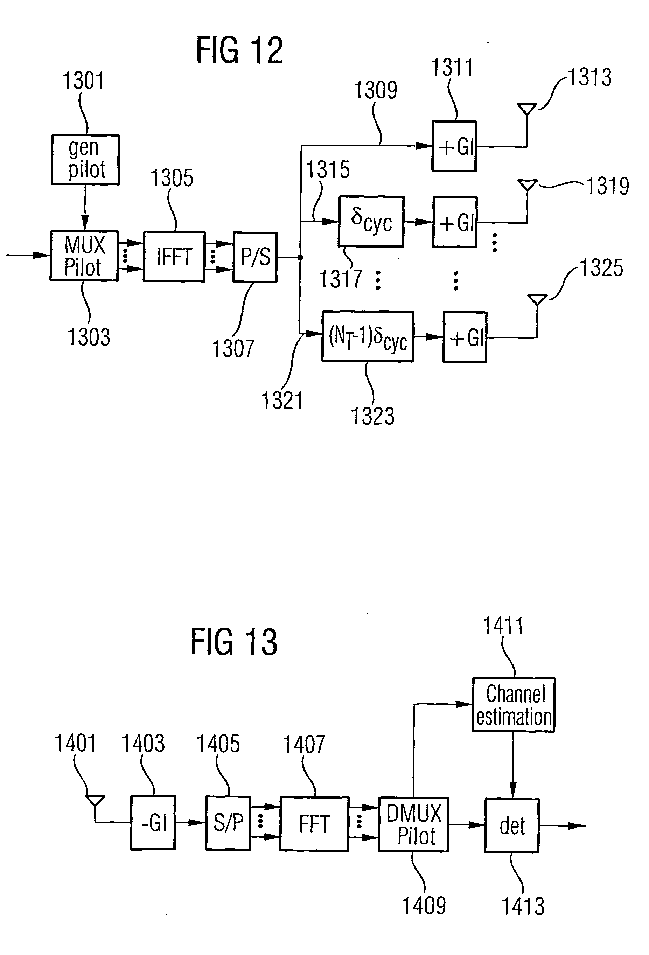

Fig. 12 shows a block diagram of a transmitter of a OFDM based system utilizing cyclic delay diversity (CDD).

The transmitter comprises a block 1301 for generating pilot sequences which are provided to a multiplexer 1303 for multiplexing same into a data stream provided via a further input of the multiplexer 1303. The multiplexer 1303 has a number of outputs coupled to a IFFT transformer 1305 (IFFT = inverse fast Fourier transform) having a plurality of outputs coupled to a parallel-to-serial converter 1037 (P/S). A signal provided by the P/S converter 1037 is then divided into $N_T$ identical copies, wherein $N_T$ denotes a number of transmitting points. A first copy provided via a signal path 1309 is provided to a guard insertion block 1311. After guard interval insertion, a resulting signal is transmitted via a first antenna 1313.

A second copy provided via a second signal path 1315 is provided to a cyclic delay element 1317. After guard interval insertion, a resulting signal is transmitted via a second transmit antenna 1319. Accordingly, a $N_T{}^{th}$ signal copy is provided via a $N_T{}^{th}$ signal path 1321 to a cyclic delay element 1323. After guard interval insertion, a resulting signal is transmitted via a $N_T{}^{th}$ antenna 1325.

A major difference to a standard OFDM system are the delay elements (delay units) in the transmitter inducing antenna specific delays of $\delta_{cyc}^{(\mu)}$ samples before guard interval insertion and further transmitter front end processing. Since a signal processing usually performed digitally, the delay elements may be formed to perform cyclic shifts.

Fig. 13 shows a block diagram of a corresponding receiver of a OFDM based transmission system. The receiver comprises a receive antenna 1401 coupled to a guard interval removal block 1403. After removing the guard interval, a resulting signal is provided to a serial to parallel converter 1405 (S/P) having a number of outputs coupled to a FFT transformer 1407. The FFT transformer 1407 has a plurality of outputs coupled to a de-multiplexer 1409 (DMUX) being operative for de-multiplexing the received versions of the pilot sequences for channel estimation purposes. The de-multiplexer 1401 is coupled to a channel estimator 1411 and to a detector 1413. The detector 1413 is for example operative for equalizing a received signal using channel estimates providers by the channel estimator 1411.

Since the receiver observes an equivalent single antenna channel, the receiver front end is unaffected whether CDD is used or not.

However, the CDD transmission technique makes the channel more frequency selective since cyclic delays in time domain (after the IFFT at the transmitter) are transformed to phase shifts at the receiver in the frequency domain (after the FFT at the receiver). Therefore, a reliable channel estimation is only possible, when using a standard OFDM receiver, when all sub-carriers are pilot symbols. This approach suffers, however, from the problem, that in this case no information transmission is possible during transmission of pilot sequences. In other words, the channel estimation can only be performed at certain time instants, so that a continuous tracking of channel variations cannot be performed. This issue will be addressed later in detail.

As has been mentioned above, the effective CTF comprises a superposition of a plurality of distinct CTFs associated with the distinct communication channels. However, the distinct CTFs are not superimposed in a straightforward way since each cyclic delay associated with a respective CTF introduces an additional channel characteristic associated with a delay factor introducing additional phase shifts. Therefore, a standard channel estimation unit of a conventional OFDM receiver would fail, when applied to channel estimation within a CDD transmission scenario. Although in A. Dammann and S. Kaiser, "Standard Conformable Antenna Diversity Techniques for OFDM and its Application to the DVB-T System", in Proc. IEEE Global Telecommunications Conference (GLOBECOM 2001), San Antonio, USA, pp. 3100-3105, Nov. 2001. it was stated that CDD is fully standard conformable to conventional OFDM receivers, the above-indicated problem clearly shows that, unfortunately, this is in general not the case, which will be elaborated later.

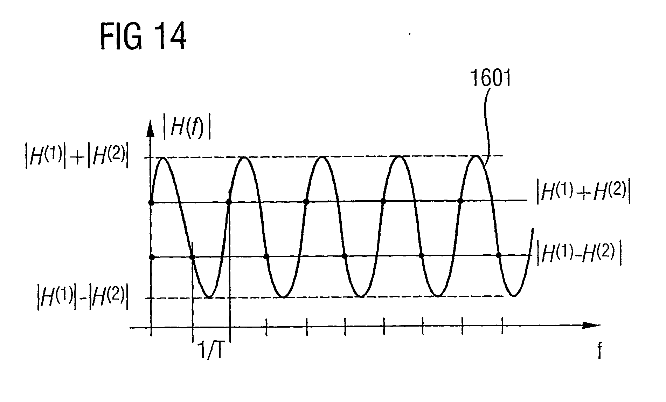

Fig. 14 demonstrates an influence of CDD on a characteristic of a resulting communication channel.

In order to demonstrate the effect of CDD-OFDM, an effective CTF 1601 is considered, by the way of example only, for $N_T$=2 transmit antennas, wherin a first flat fading channel extending from a first transmitting point to a receiving point has a CTF $H^{(1)}(f) = H^{(1)}$ and a second flat fading channel extending from a second transmitting point to the receiving point has a second CTF $H^{(2)}(f) = H^{(2)}$. The first CTF and the second CTF may be considered as being the CTFs of the first and second antenna, which are both frequency independent. Moreover, it is assumed that a cyclic delay of half of the OFDM symbol duration is inserted for the second antenna, $\tau_{cyc}^{(2)} = \delta_{cyc}^{(\mu)} T_{spl} = T / 2$, where T and $T_{sp1}$ denote the OFDM symbol duration and the sampling duration. A snapshot of the magnitude 1601 of the effective CTF (observed CTF)demonstrates that the effective CTF is not frequency independent anymore. In other words, the cyclic delay diversity introduce a considerable amount of frequency diversity which is reflected by a frequency dependency of the effective CTF.

It can be seen that the two frequency flat but independently fading CTFs of the individual antenna branches $H^{(1)}$ and $H^{(2)}$ have been transformed to the frequency selective CTF H(f) at the receiver by cyclically delaying the transmitted signal of the second antenna. The magnitude 1601 of the effective CTF, $|H(f)|$, is a sine wave oscillating between $| H^{(1)} | + | H^{(2)} |$ and $| H^{(1)} | - | H^{(2)} |$.

For pilot-symbol aided channel estimation (PACE) known symbols (pilots) are inserted with an equidistant spacing of $D_f$ sub-carriers. By the way of example only it is assumed, that, in the case of the above example, $D_f = 2$, i.e. every second transmitted sub-carrier contains a pilot (pilot value). In this case only $H(f = 2i / T) = H^{(1)} + H^{(2)}$ can be

observed. This means that a conventional SISO channel estimator which basically interpolates between the pilot symbols in order to estimate the channel on all sub-carriers would estimate a frequency flat channel $\hat{H}(i/T) = H^{(1)} + H^{(2)}$. This means that the channel cannot be estimated for odd sub-carriers, which means that all odd sub-carriers are lost. Only using a pilot spacing of $D_f = 1$, i.e. all sub-carriers are pilot symbols, reliable channel estimation is possible even in the case of the symbol example above. However, this approach is associated above-discussed problem of an inefficient exploitation of the available bandwidth, since information transmission is not possible during transmission of pilot sequences.

One solution of the afore-mentioned problem is to insert a MISO pilot grid, that is each transmit antenna is allocated its own pilot sequence. Unfortunately, the simple transceiver structure of the CDD-OFDM system shown in Fig. 12 cannot be maintained. Instead, each transmit antenna does require its own IFFT unit since the pilot grid is inserted prior to OFDM modulation. This would result in a complex transmitter structure.

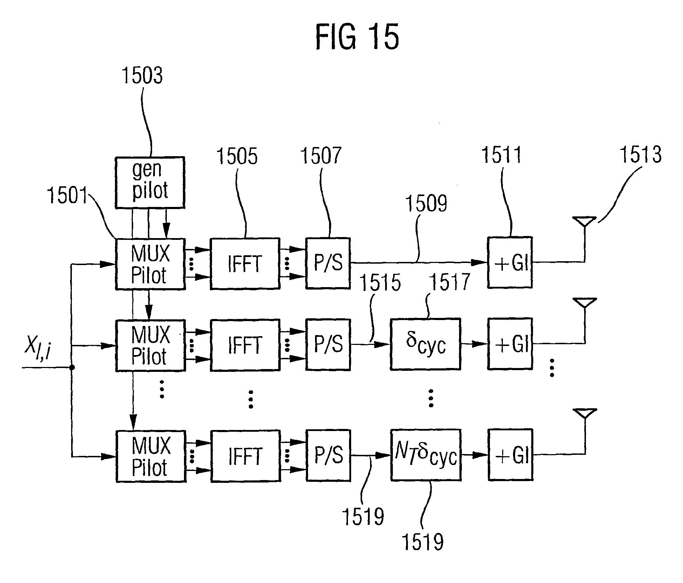

Fig. 15 shows a block diagram of a transmitter of a CDD-OFDM system using an individual pilot insertion unit for each antenna.

A data stream is divided into a plurality of identical copies, wherein each copy is provided to a respective multiplexer 1501 being operative for multiplexing pilot sequences generated by a pilot sequence generator 1503 into a respective copy of the data stream. The multiplexer 1501 has a plurality of outputs coupled to an IFFT transformer 1505 of a plurality of IFFT transformers. Each transformer 1505 has a plurality of outputs coupled to a parallel-to-serial converter 1507, wherein each parallel-to-serial converter is associated with a corresponding signal path. In accordance with the previous explanations, the first signal path 1509 is coupled to a guard insertion block 1511 having an output coupled to a first antenna 1513. Accordingly, a second signal path 1515 is coupled via a first delay element 1517 and a guard insertion block to a further transmit antenna of $N_T$ transmit antennas. Accordingly, a $N_T{}^{th}$ path 1519 of $N_T$ paths is coupled by a delay element 1519 and a guard insertion block to an associated transmit antenna.

The transmitter shown in Fig. 15 demonstrates the increased complexity of the resulting transmitter, when an extra IFFT unit is required for each antenna. This increases complexity conflicts with one of the main advantages of the CDD transmission technique, namely its simplicity, which would be compromised by the requirements of both the transmitter and the receiver.

For the receiver, the general structure as shown in Fig. 12 comprises a true MISO estimator, i.e. an estimator being suitable to estimate $N_T$ channel transfer functions (CTFs) per sub-carrier. However, this is generally more complex than a single input single output (SISO) channel estimation unit.

The increased complexity is due to the fact that an extra signal processing part is to be used for each transmit antenna path in order to enable the receiver to separate the estimates of the CTFs of the distinct communication channels.

US 2002/0034161 A1 discloses a method of determining a maximum likelihood frequency domain estimate of a channel response of a channel. The channel estimator comprises an IFFT, a weighting matrix and a FFT. The channel estimation is performed in time domain using the weighting matrix solving the least squares problem. Further, document D1 discloses a device comprising means for capturing reference tones. The means for capturing comprises a circuitry typically found in a receiver such as an antenna, a low noise power amplifier, a bandpass filter, an analog-digital converter, a time synchonization unit and an FFT/IFFT circuit.

US 2002/0118771 A1 discloses a pilot P(k), which is a discrete sequence of complex symbols which are indexed in frequency with the parameter k and ranges from 0 to N-1, wherein an Inverse Discrete Fourier Transform is used for transforming the pilot into the time domain. The resulting time domain sequence p(n) is cyclically rotated by a predetermined step.

It is the object of the present invention to provide a concept for an efficient estimation of a channel transfer function.

This object is achieved by a channel estimator in accordance with claim 1 or by an apparatus for generating $N_T$ pilot sequences in accordance with claim 21 or by a method for estimating a channel transfer function in accordance with claim 32 or by a method for providing $N_T$ pilot sequences in accordance with claim 33 or by a computer program in accordance with claim 34.

The present invention is based on the finding that cyclically delaying a time domain signal introduces a coefficient dependent phase shift of a spectral representation of the time domain signal. This is equivalent to coefficient-wise multiplying the spectral representation of the time domain signal by a complex or real valued phase shift sequence. This operation corresponds to up-converting or down-converting the spectral representation of the time domain signal when the phase shift sequence represents a carrier wave having a non-zero carrier frequency. As a result, a spectrum of the spectral representation of the time domain signal is shifted and occupies now a different spectral region having a center frequency which is determined by the carrier frequency.

The above considerations are based on the fact, that the spectral representation itself is a sequence having a spectrum. By the way of example only, reference made to OFDM systems were the spectral representation results from processing information bits prior to applying the IFFT transform to obtain the time domain signal. However, prior to applying the IFFT transform, the spectral representation is processed by using conventional signal processing methods like for example filtering.

The spectral representation can also be obtained from a time-frequency transform of the time domain signal by, for example, the means of a Fourier transform.

For example, the time domain signal is cyclically delayed such that the spectral representation of the time domain signal is multiplied by a phase shift sequence +1, -1, +1, -1 etc. Hence, the phase shift sequence represents a sampled version of a sine wave (carrier) having a certain carrier frequency being related to a sampling instant. If, for example, the spectral representation is a base band signal, then it is up-converted to a band-pass spectral region having a center frequency corresponding to the carrier frequency. After transmitting the cyclically delayed time domain signal through a communication channel, a time domain receive signal is obtained having a spectral representation which occupies the band-pass spectral region having the center frequency (assuming that a Doppler frequency shift is zero). If, at the receiver, a time-frequency conversion of the receive signal is performed in order to provide the spectral representation of the receive signal, then a band-pass filter applied to the spectral representation of the receive signal can be used to detect information within the band-pass spectral region. After down-convertion, a received version of the transmitted spectral representation is obtained occupying, for example, the base-band spectral region.

The present invention provides, generally, an efficient concept for detecting and separating the superimposed signals from a receive signal, when the spectral representations of the superimposed signals occupy different and nonoverlapping spectral regions having different center frequencies. In accordance with the present invention, for example a tunable band-pass filter or a plurality of band-pass filters applied in parallel to the spectral representation of the receive signal can be used for detecting and separating each of the superimposed signals.

By the way of example, in the following reference is made to a cyclic delay diversity technique applying two transmitting antennas resulting in a transmitter structure as shown in Fig. 12 for the case $N_T$=2. Furthermore it is assumed for the sake of descriptional simplicity, that no additional information data is provided to the multiplexer 1303. As is depicted in Fig. 12, the origin pilot sequence is transformed into a transmit signal by the IFFT transformer 1305, wherein the transmit signal ("time-domain signal") is common for all signal paths. However, the delay element 1315 introduces a certain delay to a copy of the transmit signal provided via the second signal path 1315 with respect to a copy of the transmitted signal provided via the first signal path 1309. Furthermore, it is assumed in the following that the origin pilot sequence has a spectrum occupying a base-band region. If the cyclic delay introduced by the delay element 1317 corresponds, for example, to the cyclic delay mentioned in connection with the embodiment of Fig. 14, then a spectral representation of a shifted copy of the transmit signal occupies a band-pass spectral region, wherein the spectral representation of the transmit signal provided via the first signal path 1509 occupies the base-band spectral region. In other words, both spectral representations occupy different spectral regions. After transmitting the (non-delayed) copy of the transmit signal (first pilot sequence) via the first transmit antenna 1513 and the delayed copy of the transmit signal (second pilot sequence) via a second antenna through a first and through a second communication channel to a receiver, a receive signal is received including a superposition of the both transmitted signals (pilot sequences). In accordance with the present invention, the channel transfer function of the second communication channel extending from the second transmit antenna to the receiver can be estimated from a filtered version of a spectral representation of the received signal, wherein the filtered version of the spectral representation is obtained by filtering the spectral representation of the received signal using a band-bass filter. Accordingly, in order to estimate the channel transfer function of the first communication channel extending from the first antenna 1513 to the receiver, a low-pass filter can be used for filtering the spectral representation of the receive signal in order to provide the required signal component.

In accordance with the present invention, the channel transfer functions of the distinct communication channel can be detected and separated by the inventive band-pass filtering when a side information on a respective phase shift sequence or, especially in a CDD-scenario, when a side information on cyclic delays in known. This information can be, provided to the receiver via an additional control channel. Moreover, if a fixed cyclic delay diversity scenario is used, the applied cyclic delays are known a priori.

A further advantage of the inventive concept is, that a simple transceiver structure for CDD-OFDM systems can be maintained which results in the fact that the conventional transmitter and receiver structures as shown in Fig. 12 and 13 for $D_f$>1 can be used. Such larger pilot spacings $D_f$ are required to support high velocities of the mobile user for bandwidth efficient and robust channel estimation schemes.

A further advantage of the present invention results from the fact, that the inventive concept enables using CDD-OFDM transmission systems with arbitrary cyclic delay $\delta_{cyc}^{(\mu)}$. While the range of cyclic delays $\delta_{cyc}^{(\mu)}$ which can be supported with conventional channel estimation techniques is limited, arbitrary $\delta_{cyc}^{(\mu)}$ can be supported using the inventive scheme. The conventional SISO estimator must have a pilot spacing of $D_f$ = 1, if the maximum cyclic delay $\tau_{cyc}^{(\mu)} = \delta_{cyc}^{(\mu)} T_{spl}$ is chosen. On the other hand, the inventive estimation scheme provides an estimator for the maximum cyclic delay of $\tau_{cyc}^{(\mu)} = (\mu - 1)T / N_T$. Moreover, constraints for the choice of $D_f$ are significantly less stringent when compared to the conventional estimator. This effectively allows to reduce the overhead due to the pilots, i.e. a pilot spacing $D_f$ can be increased. Moreover, the inventive concept improves a channel estimation performance since even for systems with $D_f = 1$ the inventive estimator is of advantage. Since a knowledge about cyclic delays are efficiently exploited at the receiver, the performance can be improved without increasing complexity and computational costs.

In accordance with the present invention, the simple CDD-transmission structure can be maintained even when the pilot sequence, a copy of which is to be delayed, results from a frequency-time conversion of a multi-carrier sequence in a CDD-OFDM scenario. The multi-carrier sequence can be obtained from, for example, assigning successive values of an origin sequence to every $D_f^{th}$ sub-carrier of a plurality of successive sub-carriers of a multi-carrier modulation scheme. Therefore, information values can be assigned to the remaining sub-carriers, so that a simultaneous data transmission and pilot transmission for channel tracking is possible. Therefore, the pilot sequence in the "time-domain" comprises a training part and an information part.

In order to obtain the effective CTF, a MISO estimator may estimate all estimates $H^{(\mu)}(i/T)$ for all $\mu = \{1,\cdots,N_T\}$ transmit antennas separately. The observed (effective) CTF $H(i/T)$ can be reconstructed if the cyclic delays are provided as side information.

Further embodiments of the present invention are described in detail with respect to the following figures, in which:

Fig. 1 shows a block diagram of a channel estimator for estimating a channel transfer function in accordance with a first embodiment of the present invention;

Fig. 2a, 2b and 2c demonstrate the inventive concept;

Fig. 3 shows an effective channel input response in a CDD-OFDM system;

Fig. 4a, 4b and 4c show pilot grid structures;

Fig. 5 shows a pilot grid structure;

Fig. 6 shows a pilot grid structure;

Fig. 7 shows a block diagram of a modified CDD-OFDM transmitter in accordance with a first embodiment of the present invention;

Fig. 9 shows a block diagram of an inventive apparatus for providing pilot sequences in accordance with the present invention;

Fig. 10 shows block diagrams of an OFDM modulator and of an OFDM de-modulator;

Fig. 11 shows a block diagram of a MISO-OFDM system;

Fig. 12 shows a block diagram of a CDD-OFDM-transmitter;

Fig. 13 shows a block diagram of a OFDM receiver;

Fig. 14 shows a magnitude of an effective channel transfer function in a CDD-scenario; and

Fig. 15 shows a block diagram of a CDD-OFDM transmitter using an individual pilot insertion unit for each antenna.

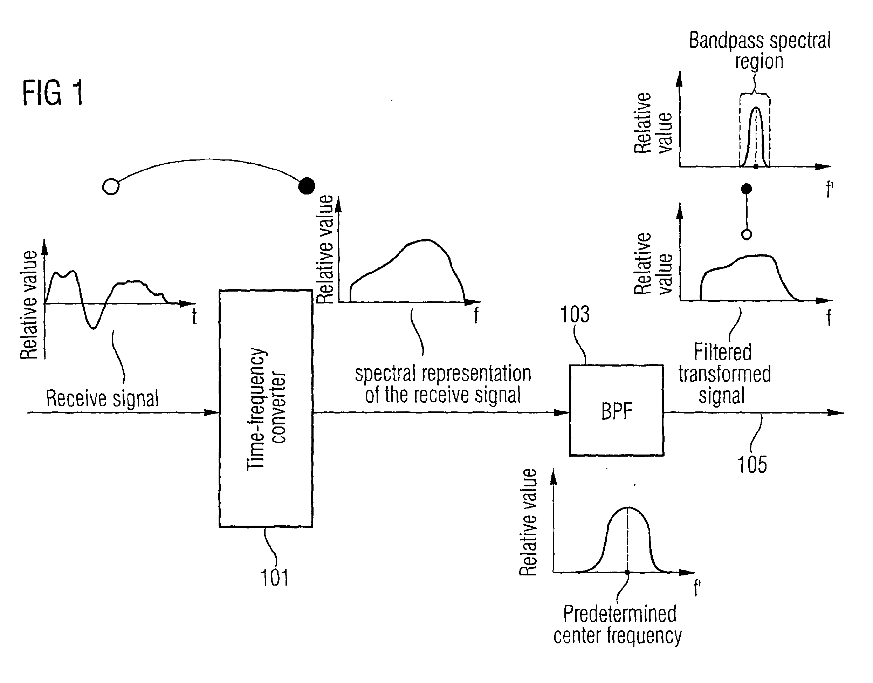

The inventive channel estimator shown in Fig. 1 comprises a time-frequency converter 101 having an input and an output, wherein the output of the time-frequency converter 101 is coupled to a band-pass filter 103. The band-pass filter 103 has an output 105.

The channel estimator shown in Fig. 1 is operative for estimating a channel transfer function of a communication channel from a receive signal provided to the input of the time-frequency converter 101. The receive signal includes a pilot sequence being transmittable from a transmitting point to a receiving point through the communication channel.

The transmitting point may be associated with, for example, a single signal path of a cyclic delay diversity transmitter. Accordingly, the receiving point may be incorporated, together with the inventive channel estimator, in a communication receiver and may comprise a receive antenna. The pilot sequence ("time-domain signal") is designed such that a spectral representation of the pilot sequence occupies a band-pass spectral region having a predetermined center frequency, wherein the predetermined center frequency may correspond to a band-pass carrier frequency.

As is depicted in Fig. 1, the receive signal is converted by the time-frequency converter 101 into a different signal, which, in the following, will be referred to as a spectral representation of the receive signal. The time-frequency converter may, for example, comprise a Fourier transformer being operative for performing a fast Fourier transform, a discrete fast Fourier transform etc. However, the time-frequency converter may perform any transform transforming the receive signal from the "time domain" to "frequency domain", like for example a Laplace transform.

At the output of the time-frequency converter 101, the spectral representation of the receive signal is provided. For the sake of convenience, the spectral representation is depicted in Fig. 1 with respect to a frequency-axis f. However, as has been mentioned above, the spectral representation of the receive signal is a different representation of the receive signal having itself a spectrum. Since the receive signal comprises a received version of the pilot sequence, the spectral representation of the receive signal comprises a received version of spectral representation of the pilot sequence having a spectrum occupying the band-pass spectral region mentioned above. Moreover, the received version of the spectral representation of the pilot sequence results from combining the spectral representation of the pilot sequence with the channel transfer function. Therefore, a filtered transformed signal resulting from filtering the spectral representation of the receive signal by the band-pass filter 103 having the predetermined center frequency comprises an estimate of the channel transfer function.

In Fig. 1, a characteristic of the band-pass filter is shown with respect to a frequency which is, for the sake of convenience, denoted by f'. Additionally, Fig. 1 shows a characteristic of the filtered transformed signal and its spectrum occupying the band-pass spectral region with respect to the f' axis.

If, for example, a magnitude of the spectral representation of the pilot sequence is an all one sequence, and if the pilot sequence is comprised by a transmit signal which is a delayed copy of an another transmit signal, then the filtered transformed signal is the estimate of the channel transfer function including the cyclic delay diversity characteristic. Additionally, the band-pass filter suppresses channel noise due to a band-pass characteristic.

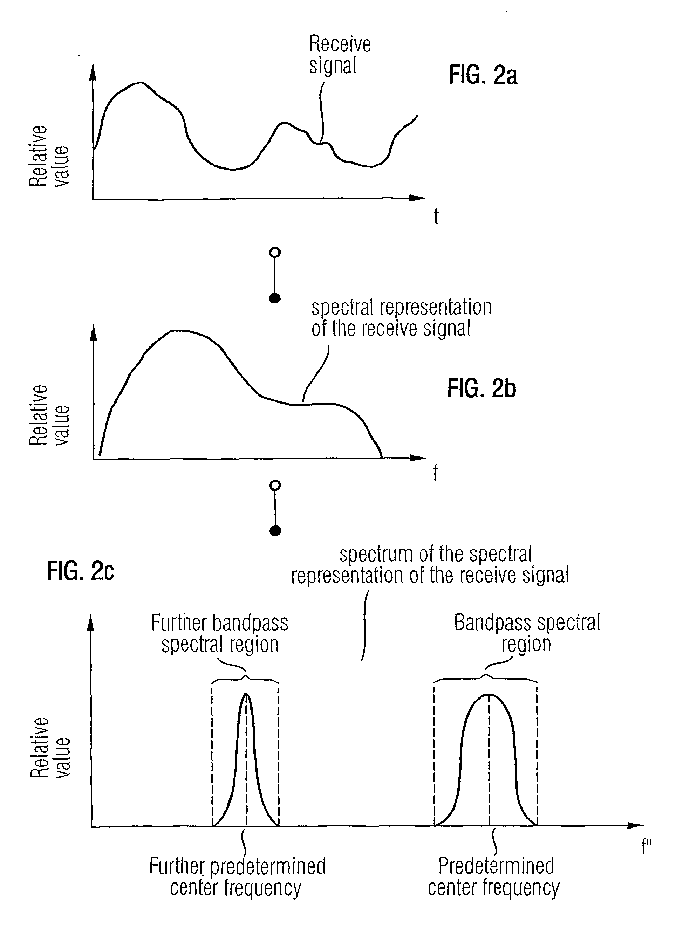

Fig. 2a, 2b and 2c demonstrate the inventive concept for the case of two pilot sequences having spectral representations occupying different band-pass spectral regions. These pilot sequences can, for example, originate from an pilot sequence or, generally, from a time domain signal, wherein a first copy of the pilot sequence is delayed by a first delay factor and wherein a second copy of the origin pilot sequence is delayed by a second delay factor in a CDD transmission scheme. Therefore, a receive signal comprising a superposition of received versions of the first and of the second pilot sequence has a spectral representation having a spectrum, in which the band-pass spectral region (the first band-pass spectral region) and a further band-pass spectral region (second band-pass spectral region) having a predetermined center frequency and a further predetermined center frequency are present. In other words, the spectral representation of the received signal has a spectrum comprising the spectral components associated with the spectrums of the first and of the second pilot sequences.

In order to obtain an estimate of a channel transfer function of a first communication channel, for example, a first band-pass filter can be used having the predetermined center frequency. Accordingly, in order to obtain an estimate of a channel transfer function of the second communication channel, a further band-pass filter can be used having the further predetermined center frequency. However, the band-pass spectral region and the further band-pass spectral region can be obtained by filtering the spectral representation of the receive signal using only one band-pass filter which is tunable with respect to the predetermined center frequency and, optionally, with respect to the further predetermined center frequency. In this case, the inventive channel estimator may further comprise means for tuning the band-pass filter in order to adjust its center frequency and optionally, its bandwidth for a suitable filtering of the spectral representation of the receive signal in order to obtain the desired estimate of the respective channel transfer function.

For example, the band-pass filter is a digital filter having a set of filter coefficients applied to filtering. In this case, the means for tuning the band-pass filter may comprise a means for providing the set of filter coefficients in dependence of the predetermined center frequency.

Moreover, the means for providing the set of filter coefficients may be operative for calculating the set of filter coefficients in dependence of the predetermined center frequency or in dependence of the further predetermined center frequency in order to replace the filter coefficients in accordance to the spectral region to be detected. For example, the means for providing the set of filter coefficients comprises a filter memory for storing a plurality of sets of filter coefficients in dependence of a plurality of predetermined center frequencies, which can be calculated or pre-stored.

In order to estimate the channel transfer function from the receive signal comprising a received version of the pilot sequence, the values (pilots) of the origin sequence should preferably be collected. The inventive time-frequency converter further comprises a selector for selecting every $D_f^{th}$ value of a time-frequency converted version of the receive signal to obtain the spectral representation of the receive signal. In other words, the spectral representation of the receive signal is a sequence comprising selected values. For example, the origin sequence is obtained from multiplying a further sequence by a scrambling sequence so that the resulting origin sequence has, for example, certain statistical properties like, for example, uncorrelated successive values. In this case, the inventive time-frequency converter comprises a multiplier for multiplying the spectral representation of the receive signal by a complex conjugate version of the scrambling sequence to provide a de-scrambled sequence as the spectral representation of the receive signal. For example, the scrambling sequence has constant magnitude, for example equal to one, but a different phase associated with each scrambling sequence value. This additional phase shift can be compensated at the receiver using the conjugate version of the scrambling sequence. Alternatively, the multiplier may be operative to perform a division, which is equivalent to multiplying the spectral representation of the receive signal by an version of the scrambling sequence having inverse coefficients.

Moreover, the spectral representation of the receive signal may be a set of parallel values. In order to perform filtering, the time-frequency converter may comprise a parallel-to-serial converter for providing the spectral representation of the receive signal as a set of serial values. Alternatively, a parallel-to-serial conversion may initially performed by the band-pass filter.

As mentioned above, a multi-carrier transmitter may operative for applying a pilot grid for channel estimation purposes. For example, only every $D_f^{th}$ sub-carrier comprises a pilot information. In this case, an estimate of the channel transfer function may be obtained only at discrete frequency points associated with every $D_f^{th}$ sub-carrier used at the transmitter for pilot transmission. In order to obtain an estimate of the channel transfer function at frequency points associated with sub-carriers comprising no channel information, the inventive band-pass filter may further be operative for interpolating between adjacent values of the filtered transformed signal (or of the spectral representation of the receive signal) in order to provide a frequency interpolated filtered transformed signal as the filtered transformed signal. The band-pass filter may, for example, be operative for performing a polynomial interpolation or a Wiener interpolation in order to provide frequency interpolated values.

Accordingly, the transmitter may be operative for transmitting signals containing pilot information at every $D_T^{th}$ time instant. In this case, the inventive band-pass filter may be operative for interpolating between corresponding values of the filtered transformed signal at a first time-instant and values of a further filtered transformed signal at a second time-instant in order to obtain a time-interpolated filtered transformed signal as the filtered transformed signal. In order to perform the time-interpolation, the inventive band-pass filter may use the interpolation concepts mentioned above.

In order to perform time- and frequency-interpolation, the inventive band-pass filter may firstly provide a time-interpolated filter transformed signal as the filter transformed signal and, in a next step, to apply a frequency interpolation scheme to the time-interpolated filter transformed signal or vice versa. In accordance with a further aspect of the present invention, the inventive band-pass filter may be a two-dimensional filter being operative for performing time- and frequency-interpolation simultaneously.

In accordance with a further aspect of the present invention, the receive signal may include a superposition of the pilot sequence and of a further pilot sequence being transmittable from a further transmitting point to the receiving point through a further communication channel, wherein the further pilot sequence is designed such that a spectral representation of the further pilot sequence occupies a further spectral region having a further center frequency, wherein the further center frequency is different from the predetermined center frequency. In this case, the inventive channel estimator may further comprise a further filter having the further predetermined center frequency for filtering the spectral representation of the receive signal in order to obtain a further filtered transformed signal in order to obtain an estimate of a further channel transfer function of the further communication channel.

As has been discussed in connection with the embodiment of Fig. 2, the further spectral region may be a further band-pass spectral region. In this case, the further filter is a further band-pass filter having the further predetermined center frequency being different from the predetermined center frequency.

However, the further spectral region may a base-band spectral region. This case responds, for example, to a cycling delay diversity scheme, as is shown in Fig. 12, where the first signal path 1309 is not coupled to any delay element.

In this case, the further filter is a low-path filter providing the further transformed signal which is the estimate of the further channel transfer function. Since low-pass filtering can be performed by tuning a band-pass filer to a zero-center frequency, a low-pass filtering operation can also be performed by the inventive band-pass filter, when appropriately tuned.

As has been mentioned before, the inventive concept can be applied for simplified estimating a plurality of channel transfer functions by realizing that different delays introduce different phase shifts. This can be exploited for detecting and separating the respective signal components in order to estimate the respective channel transfer function. Although the inventive concept is perfectly suited for channel estimation in cyclic delay diversity systems, it can be applied to any MISO system comprising a plurality of transmit antennas and a single receive antenna of, for example, a plurality of receive antennas, without using the cyclic delay diversity scheme. By the way of example only, a transmitter may be a space-diversity transmitter using a plurality of transmit antennas for transmitting the same transmit signal. Instead of transmitting different pilot sequences, through different communication channels, which is associated with the above-mentioned problems, the inventive approach may be applied for channel estimation. For example, the transmitter may temporarily introduce cyclic delays (cyclic shifts) so that cyclically delayed (shifted) sequences are transmitted. However, the estimated channel transfer functions using the inventive estimation scheme comprise the phase shift sequences introducing additional up- or down-converting. This influence can be compensated when an estimate of the respective channel transfer function is multiplied by the complex conjugated version of the resulting phase shift sequence, so that the conversion effect is compensated. This operation is equivalent to down-converting or up-converting.

In order to perform the above operations, the inventive band-pass filter, which is, for example, a digital filter, may comprise a superposition of a set of coefficients for band-pass filtering the spectral characterization of the receive signal and a further set of coefficients for down-converting a filtered version of the spectral representation to a base-band spectral region to provide the filtered transformed signal which is the desired estimate of the channel transfer function.

If the receive signal comprises a further pilot sequence, having the spectral representation occupying the further spectral region, then the inventive band-pass filter may comprise a further set of coefficients for simultaneously performing the band-pass filtering and the down-conversion.

Instead of performing a simultaneous filtering and down-conversion operation, the inventive band-pass filter may be formed for only band-pass filtering the spectral representation of the received signal. In this case, the inventive channel estimator may further comprise a down-converter for down-converting the filtered transformed signal provided by the band-pass filter to the base-band spectral region to obtain a down-converted signal being the estimate of the channel transfer function in the base-band spectral region.

Accordingly, the inventive channel estimator may further comprise a further down-converter for down-converting the further filter transformed signal mentioned above from the further band-pass spectral region to the band-pass region to obtain a further down-converted signal, wherein the further down-converted signal is the further estimate of the further channel transfer function.

The inventive down-conversion scheme can, however, be also performed when the inventive channel estimator is embedded within a cyclic delay diversity transmission system in order to process channel estimates of the channel transfer functions in the base-band spectral region. The processing may include reducing an estimation error, reducing an additional phase error associated with a pilot spacing, or prediction filtering, using, for example, the Wiener prediction approach in order to obtain better estimates. In a next processing step, the processed estimates of the channel transfer functions may be up-converted back to the associated spectral regions. To do so, the inventive channel estimator may further comprise an up-converter for performing the up-conversion operation.

As has been mentioned above, the effective channel transfer function associated with the cyclic delay diversity transmission scheme comprises a superposition of the channel transfer functions, wherein each channel transfer function comprises an influence with respect to the associated cyclic delay or, equivalently, to the associated cyclic shift. In order to obtain an estimate of the effective channel transfer function, the inventive channel estimator may further comprise an adder for adding the filtered transformed signals to obtain a composite transformed signal which is the estimate of the effective channel transfer function. To be more specific, the inventive adder is operative for adding the filtered transformed signal and the further filter transformed signal to obtain an estimate of the effective channel transfer function comprising a superposition of the estimate of the channel transfer function and the estimate of the further channel transfer function. As mentioned above, the further channel transfer function may occupy a base band or a band-pass spectral region.

As mentioned above, the estimate of the channel transfer function may be erroneous. This is, for example, the case, when the pilot sequence results from a frequency time conversion of a multi-carrier sequence, which is obtained from assigning successive values of the origin sequence to every $D_f^{th}$ sub-carrier of a plurality of successive sub-carriers. Hence, the estimate of the channel transfer function (in the band-pass spectral region or in the base-band spectral region) has a phase error depending on $D_f$. For example, the phase error is a constant phase term inducing an error phase proportional to $D_f$. In order to reduce the phase error, the inventive channel estimator may further comprise means for correcting the phase error of the estimate of the channel transfer function. For example, the means for correcting the phase error is operative to multiply the coefficients of the estimate of the channel transfer function by a complex sequence compensating the phase error. This operation can be applied to the estimates of the channel transfer function occupying the base-band spectral region or occupying the band-pass spectral region.

By the inventive exploiting of the DFT (discrete Fourier transform) properties of CDD, the structure of the transmitter unit as shown in Fig. 12 can be retained, while the receiver can still fully utilize a MISO channel estimation unit. In other words, the inventive concept establishes a virtual MISO pilot grid with the conventional CDD-OFDM transmitter from Fig. 12. The term "virtual MISO pilot grid" describes the resulting spectral representations of the pilot sequence after introducing cyclic delays, so that each channel transfer function of the plurality of channel transfer functions experiences its own, unique training sequence.

The inventive concept is based on the DFT property that cyclic delays are translated to phase shifts by the DFT operation. This can be exploited if the cyclic delays $\delta_{cyc}^{(\mu)}$ are known to the receiver, since the receiver will observe transmit antenna dependent phase shifts of the received signal. If the system parameters are properly chosen, a set of phase shifted pilot sequences can be generated by the antenna dependent cyclic delay operation.

Referring again to the embodiment of Fig. 14, the cyclic shift of $\tau_{cyc}^{(2)} = \delta_{cyc}^{(\mu)} T_{spl} = T / 2$ will translate to a phase shift of $e^{-j\pi i} = (-1)^i = \{1,-1\}$, which will materialize in the CTF of the equivalent SISO channel H(f), such that $H(i/T) = H^{(1)} + H^{(2)}(-1)^i$. The inventive idea is based on a consideration of the oscillating sign of $H^{(2)}$ between even and odd sub-carriers as a phase shifted pilot sequence, which can be utilized as side information for the channel estimator. As mentioned above, the oscillating sign may be considered as being a sampled version of a sine or cosine carrier wave.

While the possible choice of cyclic delays is not limited to $\tau_{cyc}^{(2)} = T / 2$, there are some constraints for the system parameters which result in appropriate virtual MISO pilot sequences. These constraints will be derived later.

In accordance with the present invention, the MISO channel estimation unit can further be simplified. This, however, requires a cyclic delay of $\tau_{cyc}^{(\mu)} = (\mu - 1)T / N_{T}$. In order to explain the inventive simplification, reference is made again to the embodiment of Fig. 14. The basic idea is to group the sub-carriers into two sets: odd and even sub-carriers. Even and odd sub-carriers have the CTF $H(2i / T) = H^{(1)} + H^{(2)}$ and $H([2i + 1]/T) = H^{(1)} - H^{(2)}$, respectively. The result is two independent CTFs per set. In the case the CTFs $H^{(1)}$ and $H^{(2)}$ are flat fading as indicated in Fig. 14, both $H(2i / T)$ and $H([2i + 1]/T)$ are also frequency flat, drawn as straight lines in Fig. 14. If the pilot spacing $D_f$ is an odd number, the pilot will be alternately placed on odd and even sub-carriers. Therefore, in accordance with the present invention, independent SISO channel estimator, one to estimate the CTF of the odd sub-carriers $\hat{H}([2i + 1] /T) = H^{(1)} - H^{(2)}$ utilizing pilot symbols, which lie on odd sub-carriers, and an equivalent estimator for the even sub-carriers, which estimates $\hat{H}(2i / T) = H^{(1)} + H^{(2)}$ are employed.

In order to explain the inventive concept in detail, in the following, a time-variant frequency selective fading channel modelled by a tapped delay line with $Q_0$ non-zero taps will be considered. It is assumed that the channel is time-limited by the maximum delay $\tau_{max} = Q \cdot T_{spl}$. The channel impulse response (CIR) impinging from transmit antenna $\mu$ is defined by

$$h^{(\mu)}(t, \tau) = \sum_{q=1}^{Q_0} h_q^{(\mu)}(t) \cdot \delta(\tau - \tau_q^{(\mu)})$$

where $h_q^{(\mu)}(t)$ and $\tau_q^{(\mu)}$ are complex amplitude and delay of the $q^{th}$ channel tap. The number of non-zero taps is typically smaller or equal to the maximum delay of the channel, $Q_0 \leq Q$. It is assumed that the $Q_0$ channel taps and all antennas are mutually uncorrelated. The channel taps $h_q^{(\mu)}(t)$ are zero-mean complex independent identically distributed (i.i.d.) Gaussian random variables. Due to a motion of the vehicle (mobile transmitter or mobile receiver) $h_q^{(\mu)}(t)$ will be time-variant caused by the Doppler effect. The $q^{th}$ channel tap $h_q^{(\mu)}(t)$ is a wide sense stationary (WSS) Gaussian process being band-limited by the maximum Doppler frequency $v_{max}$. It is commonly assumed that the channel impulse response (CIR) is approximately constant during one OFDM symbol so that the time dependency of the CIR within one OFDM symbol can be dropped for the sake of notational simplicity, i.e. $h_q^{(\mu)}(t) \approx h_{\ell,q}^{(\mu)}(t)$ for $t \in [\ell T_{sym},(\ell + 1)T_{sym}]$. Although this is not strictly true only for time-invariant channels, this assumption is most often justified in practice and a good system design should ensure that the OFDM symbol duration is sufficiently short.

The channel transfer function mentioned above is the Furrier transform of the CIR $h^{(\mu)}(t,\tau)$. Sampling the result at time $t = \ell T_{sym}$ and frequency $f = i/T$, the CTF at sub-carriers i of OFDM symbol 1 becomes

$$H_{\ell,i}^{(\mu)} \;=\; H^{(\mu)}(\ell T_{sym,} i \,/\, T) \;=\; \sum_{q=1}^{Q_0} h_{\ell,q}^{(\mu)} e^{-j2\pi\tau_q i \,/\, T}$$

where $T_{sym} = (N_{FFT} + N_{GI})T_{spl}$ and $T = N_{FFT}T_{spl}$ represents the OFDM symbol duration with and without the guard interval, respectively.

If the guard interval is longer than the maximum delay of the channel, i.e. $N_{GI} \geq Q$, where $Q \geq Q_0$ denotes the total number of channel taps, the orthogonality at the receiver after OFDM demodulation is maintained and the received signal after OFDM demodulation is obtained.

The introduced channel model has been introduced for multiple input single output systems. Assuming the fading at the receiver antennas is mutually uncorrelated, the channel estimation will be performed independently for each antenna. Hence, an extension to a multiple input multiple output (MIMO) system is straight forward since the channel estimation is performed on each receive antenna separately.

In the following, reference is made to an OFDM system using cyclic delay diversity (CDD), as is shown in Fig. 12.

As is depicted in Fig. 12, there is a common signal stream for all transmit antennas until after the parallel to serial conversion (PS), i.e. only one IFFT is required. After the IFFT operation and parallel to serial conversion, the data stream is split into $N_T$ sub-streams, one for each transmit antenna, and an antenna dependent cyclic delay, $\delta_{cyc\,,}^{(\mu)}$, is inserted

$$x_{\ell,n}^{(\mu)} \;=\; x_{\ell,(n-\delta_{cyc}^{(\mu)}) \,\mathrm{mod}\, N_{FFT}} \;.$$

Usually, the cyclic delay between adjacent transmit antennas is fixed such that

$$\delta_{cyc}^{(\mu)} \;=\; (\mu - 1) \cdot \delta_{cyc}, \; 1 \;\leq\; \mu \;\leq\; N_T$$

where $\delta_{cyc}^{(\mu)}$ is a design parameter within the range $[0, N_{FFT} / N_T]$. Hence, the signal transmitted on the first antenna is not delayed, $x_{\ell,n}^{(1)} = x_{\ell,n}$ .

It is instructive to consider the signal before OFDM modulation, $X_{\ell,i}$, which is related to $x_{\ell,n}$ by the IDFT. Correspondingly, the IDFT of a cyclically delayed signal $x_{\ell,n}^{(\mu)}$ mentioned above is a phase shifted version of $X_{\ell,i}$. In mathematical terms the time domain signal of transmit antennas $\mu$ is related to the frequency domain transmitted signal by

$$
x_{\ell,n}^{(\mu)} \;=\; x_{\ell,(n-\delta_{cyc}^{(\mu)}) \,\mathrm{mod}\, N_{FFT}}
$$
$$
= \frac{1}{\sqrt{N_{FFT}}} \sum_{i=0}^{N_c} \underbrace{X_{\ell,i} e^{j2\pi i(\mu-1)\delta_{cyc} / N_{FFT}}}_{X_{\ell,i}^{(\mu)}} \cdot e^{j2\pi i n / N_{FFT}} \;=\; \frac{1}{\sqrt{N_{FFT}}} \sum_{i=0}^{N_c-1} X_{\ell,i}^{(\mu)} e^{j2\pi i n / N_{FFT}}
$$

where $X_{\ell,i}^{(\mu)}$ represents the transmitted frequency domain signal of transmit antenna $\mu$. It is to be noted that $X_{\ell,i}^{(\mu)}$ does exist only virtually, it is the equivalent signal which would be obtained by inducing phase shifts before OFDM modulation rather than time delays after OFDM modulation.

Subsequently, the guard interval (GI) in the form of a cyclic prefix is added, which is typical for OFDM modulation. Then, the signal is digital to analog converted (D/A), up-converted to the radio frequency (RF) carrier frequency and transmitted over a mobile radio channel. At the receiver, after down conversion to base band and sampling, the guard interval is removed, and an IFFT operation transforms the signal into the frequency domain, i.e. the sub-carrier level. After OFDM demodulation pilot symbols are de-multiplexed and fed to the inventive channel estimation unit (channel estimator).

The received signal consists of $N_T$ signals, as is described by one of the above equations. Hence, the following is obtained

$$Y_{\ell,i} = \sum_{\mu=1}^{N_T} X_{\ell,i}^{(\mu)} H_{\ell,i}^{(\mu)} + N_{\ell,i}$$

$$= X_{\ell,i} \underbrace{\sum_{\mu=1}^{N_T} H_{\ell,i}^{(\mu)} e^{j2\pi i(\mu-1)\delta_{cyc}/N_{FFT}}}_{H_{\ell,i}} + N_{\ell,i} = X_{\ell,i} H_{\ell,i} + N_{\ell,i}$$

where $H_{\ell,i}$ can be viewed at the resulting CTF of the CDD-OFDM system. This implies that the received signal is observed as a signal stemming from an equivalent SISO system having the CTF $H_{\ell,i}$. The effect of CDD is that the channel becomes more frequency selective. Without channel coding, no improvement can be observed. However, the channel is randomised by CDD, i.e. adjacent sub-carriers become de-correlated, so that error bursts are less likely, which is beneficial if channel coding is used.

In the following, the resulting SISO channel model for CDD-OFDM, i.e. the resulting SISO channel being observed by the receiver will be examined.

Assuming a tap delay line channel model, $H_{\ell,i}$ can be specified as

$$H_{\ell,i} = \sum_{\mu=1}^{N_T} H_{\ell,i}^{(\mu)} e^{-j2\pi i[\mu-1]\delta_{cyc}/N_{FFT}} = \sum_{\mu=1}^{N_T} e^{-j2\pi i \cdot [\mu-1]\delta_{cyc}/N_{FFT}} \sum_{q=1}^{Q_0} h_{\ell,q}^{(\mu)} e^{-j2\pi i \tau_q^{(\mu)}/T} .$$

It is seen that the phase term of the resulting CTF is determined by the propagation delays $\tau_q^{(\mu)}$ and the cyclic delay parameter $\delta_{cyc}$. It is interesting to note that $\delta_{cyc}$ is independent of the physical channel, a fact which can be exploited to make CDD-OFDM channel estimation more efficient.

In accordance to the resulting CTF, a resulting CIR can be defined, which describes the equivalent SISO channel of the CDD-OFDM system, that is

$$h(t,\tau) = \sum_{\mu=1}^{N_T} h^{(\mu)}(t,\tau) = \sum_{\mu=1}^{N_T} \sum_{q=1}^{Q_0} h_q^{(\mu)}(t) \cdot \delta(\tau - \tau_q^{(\mu)} - [\mu-1]\delta_{cyc} T_{spl}/N_{FFT})$$

comparing the resulting CIR with the CIR of transmit antenna $\mu$, the resulting CIR consists of $N_T Q_0$ non-zero taps, assuming that all $N_T$ CIR have $Q_0$ non-zero taps. It is seen that the CDD-OFDM system can be transformed into an equivalent SISO-OFDM system by appropriately delaying the CIRs of the $N_T$ transmit antennas. Apart from generating a channel which is more frequency selective, the effective maximum delay of the channel $\tau'_{max}$ becomes larger, and it is upper bounded by

$$\tau'_{max} = \tau_{max} + (N_T - 1)\delta_{cyc} T_{spl} .$$

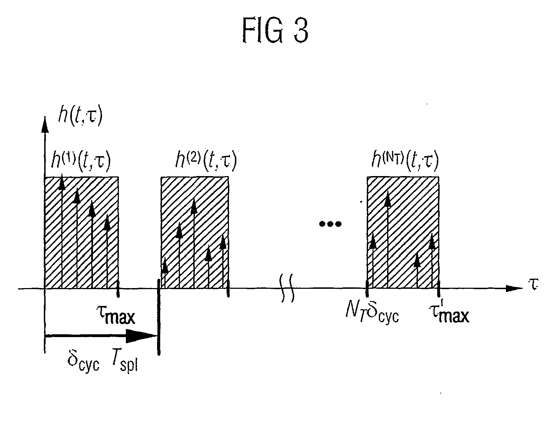

Fig. 3 shows an effective channel impulse response (a realisation of $h(t,\tau)$) of a CDD-OFDM system. As is depicted in Fig. 3, the effective channel impulse response comprises $N_T$ channel impulse responses, wherein $N_T$ -1 channel impulse responses are delayed with respect to a first channel impulse response.

Since the maximum delay of the channel is crucial for the design of the channel estimator, the extension $\tau'_{max}$ through CDD cannot be ignored. Most importantly, if pilot symbol added channel estimation (pace) is used, the estimator must satisfy the sampling theorem, which is determined by $\tau'_{max}$.

In the following, correlation properties of the channel will be discussed.

As mentioned above, each tap as well as each transmit and receive antenna are mutually uncorrelated. Assuming a wide sense stationary uncorrelated catering (WSS-US) channel, the outer correlation function of the CIR of the transmit antenna $\mu$ is in the general form

$$E[h^{(\mu)}(\tau, t)h^{(\mu)*}(\tau + \Delta\tau, t + \Delta t)] = R_{hh}^{(\mu)}(\tau, \Delta t) \cdot \delta(\Delta\tau).$$

The outer correlation function of the $q^{th}$ tap delay $\tau_q$ can be written in a product form

$$R_{hh}^{(\mu)}(\tau_q, \Delta t) = E[h_q^{(\mu)}(t)h_q^{(\mu)*}(t + \Delta t)]; \qquad q = 1, \cdots, Q_0$$
$$= R_{hh}^{\prime(\mu)}(\tau_q) \cdot R_{hh}^{\prime\prime(\mu)}(\Delta t)$$

which implies that the correlation in frequency direction is independent from the correlation in time direction. The power delay profile of the channel $R_{hh}^{\prime(\mu)}(\tau_q) = \{E[|h_q^{(\mu)}(t)|^2] = \sigma_q^{(\mu)2}\}$ for $q = [Q_0]$ is normalized such that the overall phase is one i.e. $\sum_{q=1}^{Q_0} \sigma_q^{(\mu)2} = 1.$ The corre-lation function in time direction $R_{hh}^{\prime\prime(\mu)}(\Delta t) = \{E[h_q^{(\mu)}(t) \cdot h_q^{(\mu)*}(t + \Delta t)]$ is assumed to be the same for all $Q_0$ taps.

Assuming Jake's model as is described in W.C. Jakes, Microwave Mobile Communications. Wiley, NY, 1974, the correlation in time is described by a Bessel function, that is $R_{hh}^{\prime\prime(\mu)}(\Delta t) = J_0(2\pi v_{max}\Delta t)$, where $v_{max}$ is the maximum Doppler frequency and $J_0(\cdot)$ accounts for a zero order Bessel function of the first kind.

Fourier transform of $R_{hh}^{(\mu)}(\tau, \Delta t)$ in the $\tau$ variable yields the frequency correlation function

$$E[H^{(\mu)}(f, t)H^{(\mu)*}(f + \Delta f, t + \Delta t)] \overset{\Delta}{=} R_{HH}^{(\mu)}(\Delta f, \Delta t) = R_{HH}^{\prime(\mu)}(\Delta f)R_{HH}^{\prime\prime(\mu)}(\Delta t).$$

Due to the product form, the correlation in time direction is independent of $\tau$. Thus, the correlation between OFDM symbol spaced $\Delta t = \Delta\ell \cdot T_{sym}$ apart in the frequency domain is the same as in the time domain

$$R_{HH}^{\prime\prime(\mu)}(\Delta\ell) \overset{\Delta}{=} R_{HH}^{\prime\prime(\mu)}(\Delta\ell \cdot T_{sym}) = R_{hh}^{\prime\prime(\mu)}(\Delta\ell \cdot T_{sym})$$

the frequency correlation between sub-carriers spaced $\Delta f = \Delta i/T$ apart becomes

$$R_{HH}^{\prime(\mu)}[\Delta i] \overset{\Delta}{=} R_{HH}^{\prime(\mu)}(\Delta i / T) = \sum_{q=1}^{Q_0} \sigma_q^{(\mu)2} e^{-j2\pi \tau_q^{(\mu)}\Delta i / T}$$

For CDD, the frequency correlation function of the resulting CTF is of interest, which is the sum of the $N_T$ correlation functions. Furthermore, each frequency correlation function is phase shifted according to the cyclic delay of the respective transmit antenna. Thus, the resulting frequency correlation function is in the form

$$R'_{HH}[\Delta i] = \sum_{\mu=1}^{N_T} e^{-j2\pi\Delta i \cdot (\mu-1)\delta_{cyc}/N_{FFT}} \cdot R'^{(\mu)}_{HH}[\Delta i].$$

In the following, the principle of pilot-symbol aided channel estimation for OFDM will be addressed.

For pilot-symbol aided channel estimation (PACE), known symbols (pilots) are multiplexed into the data stream, which are used as side information to estimate the channel. In order to describe pilot symbol assisted channel estimation, it is useful to define a sub-set of the received signal sequence containing only the pilots, $\{\widetilde{X}^{(\mu)}_{\tilde{\ell},\tilde{i}}\} = \{X^{(\mu)}_{\ell,i}\}$ with $\ell = \tilde{\ell}\widetilde{D}_t$ and $i = \tilde{i}D_f$. So, the pilot sequence is transmitted at $D_f$ times lower rate $\tilde{i} = \lfloor i/D_f \rfloor$ in frequency direction, and at a $D_t$ times lower rate $\tilde{\ell} = \lfloor \ell/Dt \rfloor$ in time direction, respectively (as a general convention, variables describing pilot symbols will be marked with a ~ in the following). It is further assumed that the pilots $\widetilde{X}_{\tilde{\ell},\tilde{i}}$ are chosen from a PSK constellation, by the way of example only, so that $|\widetilde{X}_{\tilde{\ell},\tilde{i}}| = 1$.

After OFDM demodulation, the received signal $Y_{\ell,i}$ is obtained. For channel estimation, the received signal at the pilot positions is de-multiplexed from the data stream to obtain the received pilot sequence

$$\widetilde{Y}_{\tilde{\ell},\tilde{i}} \overset{\Delta}{=} \widetilde{X}_{\tilde{\ell},\tilde{i}}\widetilde{H}_{\tilde{\ell},+\tilde{i}} + \widetilde{N}_{\tilde{\ell},\tilde{i}} = X_{\ell,i}H_{\ell,+i} + N_{\ell,i} \qquad with \; \{\ell,i\} \in G$$

where G is the sub-set of the OFDM frame containing the pilots.

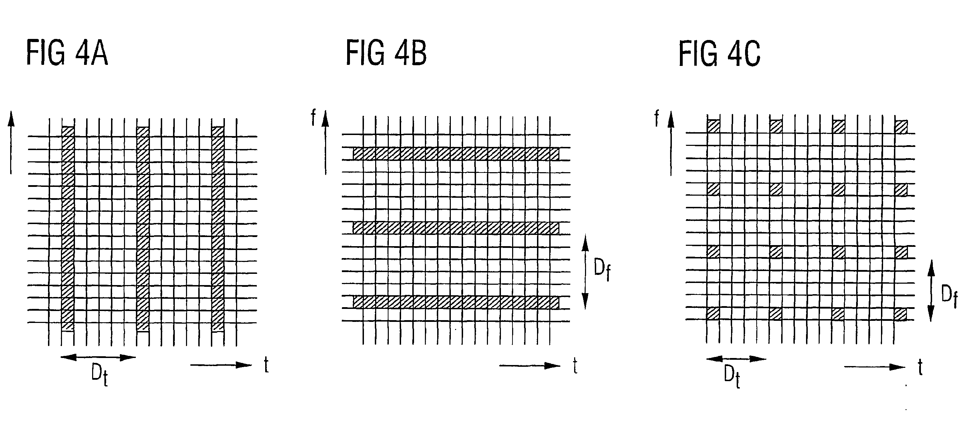

Figures 4a, 4b, and 4c show possible realizations of pilot grid structures. As is shown in Fig. 4a, one possibility of realizing a pilot grid is to transmit one OFDM symbol containing only pilots followed by $D_t$-1 data symbols. This scheme is applicable for channels with little time variations, as is observed in an indoor environment. In this case, interpolation in frequency direction is not necessary. Such a pilot grid structure is employed in the WLAN standards HIPERLAN/2 and 802.11a.

As is shown in Fig. 4b, another possibility of realizing a pilot grid is to transmit the pilots on reserved sub-carriers continuously. This scheme can support mobility but requires interpolation in frequency direction.

A more bandwidth efficient solution is to employ a scattered pilot grid, as is shown in Fig. 4c. Such a pilot grid structure is characterized by the spacing $D_f$ in frequency direction and $D_t$ in time direction, respectively.

When extending the idea of PACE to multi-carrier systems, it must be taken into account that for OFDM the fading fluctuations are in two dimensions, in time and in frequency. If the spacing of the pilots is sufficiently close to satisfy the two-dimensional (2D) sampling theorem, channel estimation and interpolation for the entire data sequence is possible. Thus, the overhead due to the pilots can be reduced but interpolation in time and frequency is required. A scattered pilot grid is used e.g. in the terrestrial digital TV standard DVB-T.

In the following, the principle of OFDM channel estimation by FIR filtering will be explained.

The first step in channel estimation process is to remove the modulation of pilot symbols, which can be introduced by the previously mentioned scrambling sequence. After removing the modulation, an initial estimate of the CTF at pilot positions is provided

$$\check{H}_{\tilde{\ell},\tilde{i}} = \widetilde{X}^*_{\tilde{\ell},\tilde{i}}\widetilde{Y}_{\tilde{\ell},\tilde{i}} = \widetilde{H}_{\tilde{\ell},\tilde{i}} + \widetilde{X}^*_{\tilde{\ell},\tilde{i}}\widetilde{N}_{\tilde{\ell},\tilde{i}}$$

with $\widetilde{X}_{\tilde{\ell},\tilde{i}}\widetilde{X}^*_{\tilde{\ell},\tilde{i}} = 1$, wherein $\widetilde{X}_{\tilde{\ell},\tilde{i}}$ denotes the scrambling sequence used at the transmitter. Subsequently $\check{H}_{\tilde{\ell},\tilde{i}}$ is processed by one of the two estimators described below.

In a typical indoor scenario, the channel may be quasistatic, i.e. channel variations within one OFDM frame can be neglected. In this case, a pilot grid transmitting one OFDM training symbol in the beginning of the frame may be transmitted, as is indicated in Fig. 4a. The channel estimator uses the demodulated pilots $\breve{H}_{\ell,\tilde{i}}$ to yield the channel estimate

$$\hat{H}_{\ell,i} = \sum_{m=0}^{M_f-1} W'_m \cdot \breve{H}_{\tilde{\ell},\tilde{i}-m}$$

where $M_f$ denotes the filter order, i.e. the number of coefficients of the FIR filter $W'_m$. Channel estimation is performed once per frame for each sub-carrier. These estimates are used for the entire frame. In R. Nilsson, O. Edfors, M. Sandell, and P. Börjesson, "An Analysis of Two-Dimensional Pilot-Symbol Assisted Modulation for OFDM," in Proc. IEEE Intern. Conf. On Personal Wireless Communications (ICPWC '97), Mumbai (Bombay), India, pp. 71-74, 1997, and in P. Höher, S. Kaiser, and P. Robertson, "Pilot-Symbol-Aided Channel Estimation in Time and Frequency," in Proc. Communication Theory Mini-Conference (CTMC) within IEEE Global Telecommunications Conference (GLOBECOM '97), Phoenix, USA, pp. 90-96, 1997, two-dimensional (2D) filtering algorithm based on DIN A filtering are described for PACE. Using the scattered pilots (or parts thereof) of one OFDM frame, $\{\breve{H}_{\tilde{\ell},\tilde{i}}\}$, the channel estimate for sub-carrier i of OFDM symbol l is obtained

$$\hat{H}_{\tilde{\ell},\tilde{i}} = \sum_{n=0}^{M_t-1}\sum_{m=0}^{M_f-1} W_{m,n}(\ell, i) \cdot \breve{H}_{\tilde{\ell}-n,\tilde{i}-m}$$

where $W_{m,n}(\ell,i)$ represents the coefficients of the 2D FIR filter having $M_f M_t$ coefficients. Generally, a separate filter is required for each sub-carrier i and each OFDM symbol 1 within one frame. Such a 2D estimator structure may be, however, too complex for practical implementation. In order to reduce the complexity, separating the use of time and frequency correlation can be performed. This combined scheme, termed double one dimensional (2x1D) PACE uses separate Wiener filters, one in frequency direction and one in time direction. The channel estimate for 2x1D PACE can be expressed as

$$\hat{H}_{\ell,i} = \sum_{n=0}^{M_t-1} W''_n \sum_{m=0}^{M_f-1} W'_m \cdot \breve{H}_{\tilde{\ell}-n,\tilde{i}-m}$$

with the filter in frequency and in time direction, $W'_m$ and $W''_n$ are 1D estimators. 2x1D PACE is motivated by the fact that the 2D correlation function can be written in a product form, i.e., the correlation function in frequency and time are independent.

The FIR filters $W' = [W'_0, \cdots, W'_{M_f-1}]^T$ and $W'' = [W''_0, \cdots, W''_{M_t-1}]^T$ may be implemented as e.g. low pass interpolation filters, polynomial interpolators or Wiener interpolation filters. The Wiener interpolation filter minimize the mean squared error (MSE) between the desired response $H_{l,i}$ and the observation, i.e. the received pilot symbols. This means that knowledge about the channel statistics is required. In contrast, low pass interpolation filters and polynomial interpolators do not assume any knowledge of the channel statistics.

It should be noted that FIR filtering is not the only way to perform channel estimation. Another possibility is to transform the received pilot sequence to a transformation domain. An additional processing may be performed in the transformation domain. A resulting processed sequence is subsequently transformed back to the original domain in order to yield an estimate of the entire OFDM symbol. The transform may be a time-frequency transform, for example a Fourier transform, or a singular value decomposition (SVD).

In any case, all of the afore-mentioned estimators are applicable as the inventive filter (band pass filter or low pass filter) within the inventive channel estimation scheme.

If a scattered pilot grid is used (c.f. Fig. 4c), the received OFDM frame is sampled in two dimensions with rates $D_f/T$ and $D_t T_{sym}$ in frequency and time, respectively. In order to reconstruct the signal, there exists a maximum $D_f$ and $D_t$, dependent on the maximum delay of the channel, $\tau'_{max}$, and the maximum Doppler frequency $v_{max}$. By applying the

sampling theorem, the following relation must be satisfied

$$\frac{D_f \tau'_{max}}{T} \leq 1 \qquad and \qquad v_{max} T_{sym} D_t \leq \frac{1}{2}$$

It is to be noted that CDD-OFDM does not have any effects on pilot spacing in time direction $D_t$. However, CDD effectively extends the maximum delay of the channel, which calls for a denser pilot spacing $D_f$, if a conventional SISO channel estimator is used. By recalling that the maximum effective delay of the CDD-OFDM system becomes $\tau'_{max} = \delta_{cyc} T_{spl}(N_T - 1) + \tau_{max}$, which may be several times larger than $\tau_{max}$. Especially, if $\delta_{cyc}$ becomes large, $D_f$ becomes significantly smaller. This means that more pilots are required, which degrades the spectral efficiency of the system.

In order to demonstrate the degradation in spectral efficiency, the following case study will be considered. The OFDM system parameters are chosen such that the maximum delay of the channel does not exceed the guard interval duration, $\tau_{max} \leq T_{GI}$. Furthermore, the OFDM symbol duration $T = N_{FET} T_{spl}$ is chosen 5 to 20 times larger than $T_{GI}$ to provide a spectrally efficient system. Thus, $\tau_{max}$ can be upper bounded by $\tau_{max} \leq T_{GI} \leq N_{FFT} T_{spl} / 5$. For example, a preferred choice for the CDD delay parameter is $\delta_{cyc} = N_{FFT} / N_T$. Substituting the above approximations into the above equation, the pilot spacing in frequency can be lower bounded by

$$D_f \leq \left\lfloor \frac{1}{\frac{N_T - 1}{N_T} + \frac{1}{5}} \right\rfloor = \begin{cases} 5, & N_T = 1 \\ 1, & N_T \geq 2 \end{cases}$$

where $\lfloor x \rfloor$ is the largest integer equal to or smaller than x. Hence, if CDD-OFDM with delay $\delta_{cyc} = N_{FFT} / N_T$ is used, conventional SISO channel estimation utilizing a scattered pilot grid is not possible. Even if a grid with $D_f=1$ is chosen, i.e. the grid where one entire OFDM training symbol is transmitted, as is indicated in Fig. 4a, the oversampling factor which is larger than 5 for the single antenna case is reduced to about 1.4 for $N_T \geq 2$, which may result in an increased channel estimation error.

In the following, the inventive improvement of conventional channel estimation schemes will be discussed in detail. By exploiting the DFT properties of CDD, a structure of the symbol transmitter unit as shown in Fig. 12 can be retained, while the receiver is able to utilize information about the cyclic delays, as has been discussed above.

The present invention further provides a virtual MISO pilot grid which can preferably be used with the conventional CDD-OFDM transmitter from Fig. 12. This imposes some constraints on the system parameters, which will be derived later. According to a further aspect of the present invention, the channel estimator structure can further be simplified. This, however, requires a cyclic delay of $\delta_{cyc}^{(\mu)} = (\mu - 1)T / N_T$.

In the following, the inventive utilizing the virtual MISO pilot grid for CDD-OFDM will be described.

The notation for the received CDD-OFDM signal allows two interpretations:

1. The received signal $Y_{\ell,i} = X_{\ell,i} H_{\ell,i} + N_{\ell,i}$ may be viewed as a SISO signal having the resulting CTF (the effective CTF) described above. The increased frequency selectivity has been shown to be a problem for a SISO channel estimator since the overhead due to the pilots is significantly increased.

2. The same received signal may be viewed as a MISO signal as well, so $Y_{\ell,i} = \sum_{\mu=1}^{N_T} X_{\ell,i}^{(\mu)} H_{\ell,i}^{(\mu)} + N_{\ell,i}$,

with the transmitted MISO signal $X_{\ell,i}^{(\mu)}$ described above. For MISO channel estimation, the inventive approach is to estimate all $N_T$ CTFs $H_{\ell,i}^{(\mu)}$. Then, the effective (resulting) CTF $H_{\ell,i}$ can be constructed by the means of, for example, superposition.

In the following, the latter case will be studied in the context of the channel estimation problem for CDD-OFDM.

It is assumed that the cyclic delay parameter $\delta_{cyc}$ and a number of transmit antennas $N_T$ are known at the receiver. Generally, for MISO systems, it is allowed that every transmit antenna signal uses its own pilot, in order to enable the receiver to separate the superimposed signals

$$\tilde{Y}_{\tilde{\ell},\tilde{\imath}} = \tilde{X}_{\tilde{\ell},\tilde{\imath}}\tilde{H}_{\tilde{\ell},\tilde{\imath}} + \tilde{N}_{\tilde{\ell},\tilde{\imath}} = \sum_{\mu=1}^{N_T} \tilde{X}_{\tilde{\ell},\tilde{\imath}}^{(\mu)}\tilde{H}_{\tilde{\ell},\tilde{\imath}}^{(\mu)} + \tilde{N}_{\tilde{\ell},\tilde{\imath}} \ .$$

The CDD-OFDM pilot $\tilde{X}_{\tilde{\ell},\tilde{\imath}}^{(\mu)}$ located at sub-carriers $i = \tilde{\imath}D_f$ and OFDM symbols $\ell = \tilde{\ell}D_t$ is in the form

$$\tilde{X}_{\tilde{\ell},\tilde{\imath}}^{(\mu)} = \tilde{X}_{\tilde{\ell},\tilde{\imath}}e^{-j2\pi\tilde{\imath}D_f\cdot(\mu-1)\delta_{cyc}/N_{FFT}} = \tilde{X}_{\tilde{\ell},\tilde{\imath}}e^{-j\tilde{\imath}\varphi(\mu)}$$

where $\varphi(\mu) = 2\pi D_f \cdot (\mu - 1)\delta_{cyc} / N_{FFT}$ defines the phase increments between adjacent pilots of the pilot sequence $\mu$. The phase term appearing in the above equations, $e^{-j\tilde{\imath}\varphi(\mu)}$ defines the previously mentioned phase shift sequence. By realising that $\tilde{X}_{\tilde{\ell},\tilde{\imath}}^{(\mu)}$ has the form of a phase shifted pilot sequence, known channel estimation techniques for OFDM with multiple transmit antennas can be applied to channel estimation. Channel estimation schemes for OFDM with multiple transmit antennas are described, for example, in Y. Li, N. Seshadri, and S. Ariyavisitakul, "Channel Estimation for OFDM Systems with Transmitter Diversity in Mobile Wireless Channels," IEEE Journal of Selected Areas on Communications, vol. 17, pp. 461-470, Mar. 1999.

In mathematical terms, the demodulated pilots $\breve{H}_{\tilde{\ell},\tilde{\imath}}$ are used. In order to obtain a channel estimate in frequency direction, i.e. an OFDM symbol containing pilot symbols, $N_t$ estimators $W_m^{(\mu)}$ (the inventive filters) each matched to the particular pilot shifts $e^{-j\tilde{\imath}\varphi(m)}$ defining the pilot shift sequence are required to provide the channel estimate for transmit antenna $\mu$

$$\hat{H}_{\tilde{\ell},i}^{(\mu)} = \sum_{m=0}^{M_f-1}W_m^{(\mu)}\cdot\breve{H}_{\tilde{\ell},\tilde{\imath}-m} = \sum_{m=0}^{M_f-1}W_m^{(\mu)}\left\{\sum_{\mu=1}^{N_T}H_{\tilde{\ell},\tilde{\imath}-m}^{(\mu)}\cdot e^{-j\tilde{\imath}\varphi(\mu)} + \tilde{X}_{\tilde{\ell},\tilde{\imath}-m}^{*}\tilde{N}_{\tilde{\ell},\tilde{\imath}-m}\right\}$$

Subsequently, an estimate of the effective (resulting) CTF $\hat{H}_{\tilde{\ell},i}$ is obtained by

$$\hat{H}_{\ell,i} = \sum_{\mu=1}^{N_T}\hat{H}_{\tilde{\ell},i}^{(\mu)}\cdot e^{-ji\varphi(\mu)/D_f} \ .$$

This case corresponds to the inventive scenario where the inventive base band filter simultaneously performs filtering and down conversion. Afterwards, a processing of the base band representations of the channel transfer functions is performed by compensating the influence of $D_f$ as has been described above. In the same step, an up conversion can be performed, i.e., the processed channel transfer functions are multiplied by associated phase shift sequences.

The complexity of the estimator is approximately $N_T M_f$ multiplications per sub-carrier, which results in about $N_T$ times the complexity of a comparable SISO estimator. This is motivated by the fact that $N_t$ signals which are in general mutually independent have to be estimated. In accordance with the previously described SISO channel estimators 2x1D PACE algorithms can be applied if a scattered pilot grid is used.

In accordance with a further aspect of the present invention, rearranging the above equations yields

$$\hat{H}_{\ell,i} = \sum_{m=0}^{M_f-1} \breve{H}_{\tilde{\ell},\tilde{i}-m} \underbrace{\sum_{\mu=1}^{N_T} W_m^{(\mu)} \cdot e^{-ji\varphi(\mu)/D_f}}_{W_m} .$$

The resulting coefficients $W_m = \sum_{\mu=1}^{N_T} W_m^{(\mu)} \cdot e^{-ji\varphi(\mu)/D_f}$ , $0 \leq m < M_f$ are sufficient to estimate the effective CTF.

It is to be noted, that the task is to estimate $\hat{H}_{\ell,i}$ rather than the CTF of the individual transmit antennas $\hat{H}_{\ell,i}^{(\mu)}$ , it is computationally more efficient to pre-compute coefficients of the band-pass filter $W_m$ and to perform the above computation, instead of computing the two above equations successively.

The above simplification results from a linear combination of the band-pass filters $\{ W_m^{(\mu)} \}$ providing the filter $W_m$. Based on this simplifications, a channel estimator's complexity at a receiver can further be reduced since only $M_f$ multiplications per sub-carrier are to be performed, instead of $N_T M_f$ multiplications, wherein the result is exactly the same.

In accordance to the SISO channel estimators, 2D and 2x1D PACE algorithms can be applied if a scattered pilot grid is used.

The pilot spacing of MISO-OFDM channel estimator is bounded by

$$D_f N_T \tau_{\max} / T \leq 1$$

It is seen that the overhead due to pilot symbols increases proportionally with the number of transmit antennas. Compared to the SISO estimator with a maximum pilot spacing bounded by the above-mentioned formula, the overhead due to the pilot symbols for the MISO estimator becomes less if $\delta_{cyc} T_{spl} > \tau_{max}$. In other words, for large cyclic delays MISO channel estimation is more efficient in terms of pilot overhead.

In the following, the necessary conditions for the inventive virtual MISO pilot grid will be described. The virtual MISO pilot sequences $\tilde{X}_{\tilde{\ell},\tilde{i}}^{(\mu)}$ are dependent on $\delta_{cyc}$ and the pilot spacing $D_f$. So, if both $\delta_{cyc}$ and $D_f$ are fixed, it may not be possible to estimate the $N_T$ different channel. The reason is that each transmit antenna's channel requires a unique pilot sequence in order to distinguish the $N_T$ channels. In other words, phase ambiguities must be avoided. In mathematical terms, the phase term $\varphi(\mu)$ between adjacent pilots $\tilde{X}_{\tilde{\ell},\tilde{i}}^{(\mu)}$ should be different for all $\mu = \{1, \cdots, N_T\}$. Hence, the following condition must hold

$$\varphi(\mu) \neq \varphi(m) + k2\pi \quad \text{for} \quad \mu \neq m; \quad \mu, m = \{1, \cdots, N_T\}; \quad k \in Z$$

where k is an arbitrary integer. Solving the above condition for k and substituting the expression for $\varphi(\cdot)$ yields

$$k \neq \frac{\delta_{cyc} \cdot (\mu - m) \cdot D_f}{N_{FFT}} \quad \text{for} \quad \mu \neq m; \quad \mu, m = \{1, \cdots, N_T\}.$$

The above condition specifies phase ambiguities of pilot symbols, which must be avoided. This imposes a constraint on the design of $\delta_{cyc}$ and $D_f$. For a given cyclic delay $\delta_{cyc}$, the pilot spacing $D_f$ cannot be chosen arbitrarily, and vice versa.

In the following, a sufficient condition to provide a set of optimum phase shifted pilot sequences will be derived.

The estimator performance is dependent on pilot sequence design. Moreover, the estimator performance is optimum if the periodicity of the phase shifted pilot sequences $\widetilde{X}_{\tilde{i},\tilde{i}}^{(\mu)}$ is $N_T$. This means that $\varphi(\mu)$ mod $2\pi$ has exactly $N_T$ constellation points. Hence, a set of $N_T$ optimum phase shifted pilot sequences according to the present invention, $e^{-j\theta_i(n)}$, appropriate to estimate $N_T$ superimposed signals is defined by

$$\theta_i(n) \; = \; in \cdot \frac{2\pi}{N_T} \; = \; i \cdot \theta(n) \quad \text{with} \quad n = \{0, \cdots, N_T - 1\}$$

where $i$ denotes the sub-carrier index and $\theta(n) = n2\pi / N_T$ denotes the phase increment between two adjacent sub-carriers. The possible realisations of $\theta_i(n)$ mod $2\pi = \theta(n)$ are $N_T$ distinct phases given by

$$P \stackrel{\Delta}{=} \left\{ 0, \; \frac{2\pi}{N_T}, \; 2 \cdot \frac{2\pi}{N_T}, \; \cdots, (N_T - 1) \cdot \frac{2\pi}{N_T} \right\}$$

which corresponds to a $N_T$-PSK constellation.

Generally, if the phase increment between adjacent pilots $\varphi(\mu)$ can be uniquely mapped to exactly $N_T$ distinctive phases within the unit circle $\theta(n) \in P$ with n = {0, $\cdots$, $N_T$ - 1}, a sufficient condition for an optimum set of phase shifted pilot sequences is obtained. This leads to a condition for $D_f$ to yield the optimum pilot grid

$$\varphi(\mu) \; = \; \theta(n) + k2\pi \quad \text{for} \quad \mu = \{1, \cdots, N_T\}, \quad \theta(n) \in P, \quad k \in Z$$

where k is an arbitrary integer. The above equation states that $\varphi(\mu)$ and multiples of 2n are within the set P so an equivalent notation is $\varphi(\mu)$ mod $2\pi \in P$. It is to be noted that the above equation is always satisfied for $\mu$=1 and n=0. However, the above equation must hold for all $\mu$ = {1, $\cdots$, $N_T$}. Furthermore, the $N_T$ realizations of $\varphi(\mu)$ must uniquely map all $N_T$ constellation points of P.

In order to identify possible values for $\delta_{cyc}$ and $D_f$, the above equation can be used. However, there is an easier way for obtaining the above-mentioned values, which can be motivated by considering $k\varphi(\mu)$ for an arbitrary integer k. Furthermore, if the above equation is satisfied, then $k\varphi(\mu)$ mod $2\pi \in P$, i.e., multiples of $\varphi(\mu)$ are also within P.

The condition of the above equation can be reformulated to

$$\varphi(\mu) \stackrel{\Delta}{=} \frac{2\pi D_f \cdot (\mu - 1) \cdot \delta_{cyc}}{N_{FFT}} \; = \; \frac{2\pi k \cdot (\mu - 1)}{N_T} \quad \text{with} \quad k \stackrel{\Delta}{=} \frac{N_T D_f \delta_{cyc}}{N_{FFT}} \in Z$$

in order to avoid phase ambiguities of the pilots, the greatest common divisor (GCD) of (k, $N_T$) is preferably not larger than 1. This yields to a sufficient condition to provide a set of $N_T$ optimum phase shifted pilot sequences in accordance with the present invention

$$GCD(k, N_T) \; = \; 1 \quad \text{with} \quad k \stackrel{\Delta}{=} \frac{N_T D_f \delta_{cyc}}{N_{FFT}} \in Z$$

The above condition gives possible values for $D_f$ if $\delta_{cyc}$ is given, which is

$$D_f = \frac{kN_{FFT}}{N_T \delta_{cyc}} \quad \text{with} \quad GCD(k, N_T) = 1.$$

The present invention provides in accordance with a further aspect a concept for a simplified channel estimation for CDD-OFDM with maximum cyclic delay.

In the following, the cyclic delay will be set to $\delta_{cyc} = N_{FFT} / N_T$. This is the maximum possible cyclic delay in the way that the mutual delay between all transmit antennas is maximized. As has been mentioned above, the maximum cyclic delay is the optimum choice for CDD-OFDM. Fortunately, this choice of the cyclic delay allows to grossly simplify the channel estimator complexity. This is particularly true for the $N_T=2$ transmit antenna systems, which may be the most practical choice for CDD.

In the following, the effective channel transfer function (resulting CTF) will be considered, which becomes

$$H_{\ell,i} = \sum_{\mu=1}^{N_T} H_{\ell,i}^{(\mu)} e^{-j2\pi i \cdot (\mu-1) / N_T} = \sum_{\mu=1}^{N_T} H_{\ell,i}^{(\mu)} e^{-ji\varphi(\mu)}$$

The phase term $\varphi_i(\mu) = i\varphi(\mu) = 2\pi i \cdot (\mu - 1) / N_T$ defining the phase shift sequence has some interesting properties:

1. All possible realizations of $\varphi_i(\mu)$ can be mapped onto $N_T$ distinctive points on the unit circle, denoted by the set P.
2. The phases $\varphi_i(\mu)$ are equivalent to phase shifted pilot sequences. Phase shifted pilot sequences are a set of $N_T$ orthogonal pilot sequences which minimize the estimation error.
3. The correlation function in frequency direction, $R'_{HH}[\Delta i]$, becomes

$$R'_{HH}[\Delta i] = \sum_{\mu=1}^{N_T} e^{-j 2 \pi \Delta i \cdot [\mu-1] / N_T} \cdot R'^{(\mu)}_{HH}[\Delta i]$$

In the following, it is supposed that the power delay profile of all $N_T$ channels is similar, so $R'^{(\mu)}_{HH}[\Delta i] \approx R'^{(m)}_{HH}[\Delta i]$. Then, $R'^{(\mu)}_{HH}[\Delta i]$ can be pulled out of the summation, and with $\sum_{\mu=1}^{N_T} e^{-j 2 \pi \Delta i \cdot [\mu-1] / N_T} = 0$ for $\Delta i = \{1, \cdots, N_T\}$, the resulting cor-relation function $R'_{HH}[\Delta i]$ becomes uncorrelated for $N_T-1$ adjacent sub-carriers.

Substituting the cyclic delay $\delta_{cyc} = N_{FFT} / N_T$, the virtual MISO or pilot sequence can be rewritten to

$$\tilde{X}_{\tilde{\ell},\tilde{i}}^{(\mu)} = \tilde{X}_{\tilde{\ell},\tilde{i}} e^{-j2\pi \tilde{i} D_f \cdot (\mu-1) / N_T} = \tilde{X}_{\tilde{\ell},\tilde{i}} e^{-j\tilde{i}\varphi(\mu)} \quad \text{with} \quad i = \tilde{i} D_f$$

where $\varphi(\mu) = 2\pi D_f \cdot (\mu - 1) / N_T$ denotes the phase shift between adjacent pilot of the pilot sequence p. It can be verified that for a pilot spacing $D_f=1$, i.e., a whole OFDM training symbol is transmitted, $\tilde{X}_{\tilde{\ell},i}^{(\mu)} = \tilde{X}_{\tilde{\ell},i} e^{-j2\pi i \cdot (\mu-1) / N_T}$ constitutes a set of $N_T$ phase shifted pilot sequences.

However, this is not the only solution for $D_f$ where an optimum set of $N_T$ phase shifted pilot sequences are obtained. Generally, substituting $\delta_{cyc} = N_{FFT} / N_T$ yields a condition for the pilot spacing $D_f$

$$GCD(D_f, N_T) = 1$$

with the expressions for $H_{\ell,i}$ given above and the constraints for $D_f$, it is possible to simplify channel estimation for CDD-OFDM. With the cyclic delay set to $\delta_{cyc} = N_{FFT} / N_T$, $N_T$ adjacent sub-carriers are grouped into $N_T$ sets. That is, the grouping into sets is specified by the modulo operation $m = i \bmod N_T$. In the following, the $n^{th}$ entry of set m of OFDM symbol 1 defined by

$$G_{\ell,n}^{(m)} \stackrel{\Delta}{=} H_{\ell, m+nN_T} = \sum_{\mu=1}^{N_T} H_{\ell, m+nN_T}^{(\mu)} e^{-j2\pi \cdot (m+nN_T) \cdot (\mu-1) / N_T}, \qquad m \stackrel{\Delta}{=} i \bmod N_T$$

$$= \sum_{\mu=1}^{N_T} H_{\ell, m+nN_T}^{(\mu)} e^{-j2\pi m \cdot (\mu-1) / N_T} \qquad n \stackrel{\Delta}{=} \left\lfloor \frac{i}{N_T} \right\rfloor$$

is defined, where each set contains $N_c / N_T$ entries, $\{G_{\ell,n}^{(m)}\}$, $n = \{0, \cdots, N_c / N_T - 1\}$. It is to be noted that the induced phase term of CDD has become independent on n, since any terms dependent on n are multiple of 2n and can thus be neglected. Each set is identified through the same phase term $\psi(m, \mu) = 2\pi m \cdot (\mu - 1) / N_T$. Then, $\psi(m,\mu)$ can be regarded as a constant with respect to n within the $n^{th}$ set. Hence, $\{G_{\ell,n}^{(m)}\}$, $n$ $n = \{0, \cdots, N_c / N_T / N_T - 1\}$ is the superposition of $N_T$ CTF multiplied by a constant phase term. This means that the artificial frequency selectivity induced by CDD has been compensated.

The basic inventive idea associated with the simplified channel estimation scheme is not to estimate the channel transfer function for each transmit antenna, $H_{\ell,i}^{(\mu)}$ separately, but to estimate $G_{\ell,n}^{(m)}$ separately for each set, in the way that only the pilots, which are also within the $m^{th}$ set are used. The estimation of $G_{\ell,n}^{(m)}$ for set n is equivalent to estimate a SISO channel. The only difference is that only pilots are used which fall into the set m. Fortunately, a subset of pilots denotes by $\widetilde{G}_{\ell,n}^{(m)}$ will be within each set if the above equation is satisfied. Since there are $N_T$ time sets, the efficient pilot spacing increases $D'_f = N_T D_f$, which effectively means that $N_T$ times more pilots are required compared to an equivalent SISO system. This is the same pilot overhead as for the true MISO estimator. The complexity, however, is the same as for a simple SISO channel estimator.

The maximum pilot spacing of the inventive technique is according to the sampling theorem

$$D_f \leq \frac{T}{N_T \max_\mu \{\tau_{max}^{(\mu)}\}}$$

where $\max_\mu \tau_{max}^{(\mu)}$ is the maximum delay of the $N_T$ superimposed channel $G_{\ell,n}^{(m)}$, which is determined by the total maximum of the individual maximum channel delays. Assuming that all channels have a similar maximum delay $\tau_{max} \approx \tau_{max}^{(\mu)}$, the max operation above may be omitted. In comparison to the required pilot spacing for the conventional SISO estimator, the inventive simplified estimator is more efficient if

$$\tau_{max} < \delta_{cyc} T_{spl}$$

which for $\delta_{cyc} = N_{FFT} / N_T$ will be most often achieved in practice, since CDD is most practical for low $N_T$.

In the following, an implementation of the inventive simplified channel estimator for CDD-OFDM will be discussed.

By the way of example, a pilot grid where the pilots in frequency are spaced $D_f$ sub-carriers apart is considered. A sub-carrier containing a pilot is determined by $i = D_f \tilde{i}$ where $\tilde{i} = \{0, \cdots, \lfloor N_c / D_f \rfloor - 1\}$ is the pilot index. If the above condition for the pilot spacing holds, then every $N_T{}^{th}$ pilot will fall in the same set. Hence, pilot positions for set m are determined by 250. With the definition for 251 for the pilots 252 as 253 with 254 is obtained. For the estimation of the $m^{th}$ set a 1D, 2D or 2x1D SISO channel estimator, as described above, respectively, with pilot spacing 255 can be applied.

The inventive channel estimator operates as follows. Firstly, the modulation of the pilot symbols is removed. The $n^{th}$ demodulated pilot of set m is in the form

$$\breve{G}_{\tilde{\ell}, \tilde{n}}^{(m)} = \tilde{H}_{\tilde{\ell}, \tilde{n} N_T + m} = \tilde{X}_{\tilde{\ell}, \tilde{n} N_T + m}^* \tilde{Y}_{\tilde{\ell}, \tilde{n} N_T + m} .$$

Channel estimation of a symbol belonging to set m is performed by only using pilots which are also in that set. This is the difference to conventional SISO channel estimation. Considering 1D channel estimation, the channel estimator of sub-carrier i = $m + nN_T$ becomes

$$\hat{G}_{\ell,n}^{(m)} = \hat{H}_{\ell, m+nN_T} = \sum_{k=0}^{M_\ell - 1} W_k' \cdot \breve{G}_{\ell, \tilde{n}-k}^{(m)} = \sum_{k=0}^{M_\ell - 1} W_k' \cdot \tilde{H}_{\ell, (\tilde{n}-k)N_T + m}$$

$$= \sum_{k=0}^{M_\ell - 1} W_k' \left\{ \sum_{\mu=1}^{N_T} H_{\ell, (\tilde{n}-k)N_T + m}^{(\mu)} e^{-j2\pi m \cdot (\mu-1) / N_T} + \eta_{\tilde{\ell}, (\tilde{n}-k)N_T + m} \right\}$$

where $\eta_{\tilde{\ell}, (\tilde{n}-k)N_T + m} = \tilde{X}_{\tilde{\ell}, (\tilde{n}-k)N_T + m}^* \tilde{N}_{\tilde{\ell}, (\tilde{n}-k)N_T + m}$ is the AWGN (average white Gaussian noise) term. The extension to 2D and 2x1D channel estimation schemes is straight forward.

The computational complexity of the inventive algorithm for the 1D estimator is $M_f$ multiplications per sub-carrier, where $M_f$ is the filter order of the inventive filter. This is the same as for the conventional SISO estimator. The MISO estimator described above has a $N_T$ times higher complexity. The performance of the inventive estimator is dependent on the chosen estimator and on the channel characteristics. However, it is to be noted that if the power delay profiles of all $N_T$ channels are similar, $N_T$ adjacent sub-carriers become de-correlated, as has been shown above, which corresponds t the grouping of the sets. So, nothing is lost if pilots are neglected which belong to adjacent sets since they are uncorrelated anyway. In this case, the inventive estimator approaches the performance of the MISO estimator at significantly lower computational cost.

In the following, by the way of example only, a CDD-OFDM system with $N_T$=2 transmit antennas will be considered, which is the preferable system set-up for CDD-OFDM, as has been mentioned above. In this case, the following simplification is obtained

$$G_{\ell,n}^{(m)} \overset{\Delta}{=} H_{\ell, m+2n} = H_{\ell, m+2n}^{(1)} + H_{\ell, m+2n}^{(2)} (-1)^m, \qquad m = i \bmod 2 \in \{0,1\}$$
$$n = \left\lfloor \frac{i}{2} \right\rfloor$$

It is seen that the CTF of antenna $\mu$=1 has no phase distortion while CTF of antenna $\mu$=2 oscillates between 1 and -1. For even and odd sub-carriers, the following is obtained

$$G_{\ell,n}^{(0)} = H_{\ell,2n}^{(1)} + H_{\ell,2n}^{(2)}, \qquad m = 0$$

$$G_{\ell,n}^{(1)} = H_{\ell,2n+1}^{(1)} - H_{\ell,2n+1}^{(2)}, \qquad m = 1$$

In other words, the simplified channel estimator scheme provides directly an estimate of the effective channel transfer function.

Preferably, an odd pilot spacing is required, since the greatest common divisor of $(D_f, 2)$ becomes one in this case. Then, one pilot belonging to set m=0 is followed by a pilot belonging to set m=1.

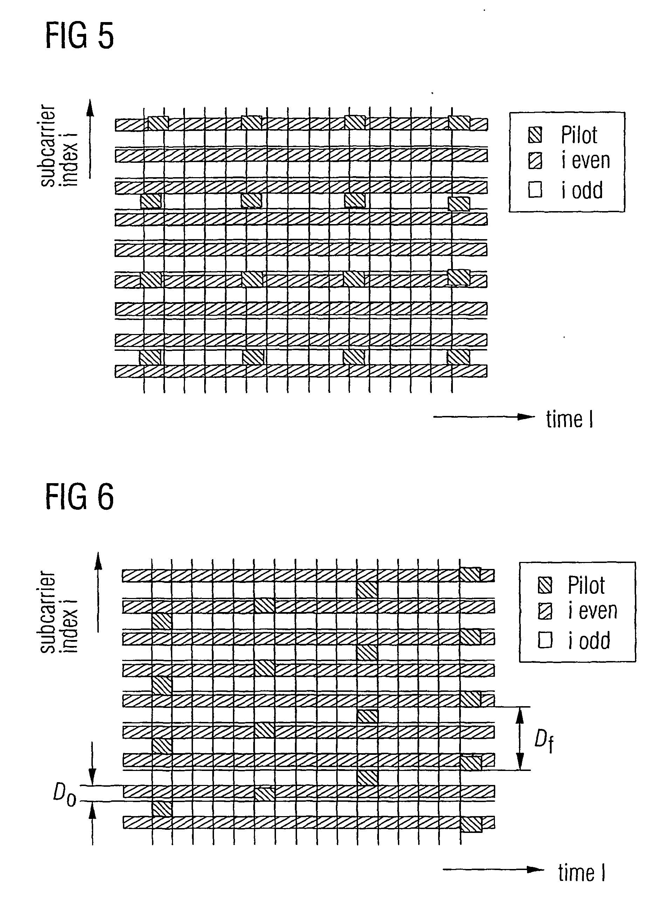

Fig. 5 shows an inventive pilot grid structure for CDD-OFDM with two transmit antennas.

As is shown in Fig. 5, two successive pilots occupy even and odd sub-carriers, respectively. For estimating the channel transfer function on the even and on the odd sub-carriers only pilots are used which are located on even and on odd sub-carriers, respectively.

In the following, some inventive modifications for channel estimation for CDD-OFDM with maximum cyclic delay will be described.

If the cyclic delay parameter $\delta_{cyc}$ is to be chosen arbitrarily, some constraints on the pilot spacing $D_f$ are imposed. For instance, for $\delta_{cyc} = N_{FFT} / N_T$ and $N_T = 2$, the pilot spacing $D_f$ must be odd.

However, these constraints limit a flexibility of the resulting systems. The present invention additionally provides a concept for relaxing the requirements for $D_f$.

In the following, the system described above with 266 will be considered, by the way of example only. By imposing an offset parameter for the pilot grid arbitrary $D_f$ can be supported. In this approach as shown in Fig. 6 for the example of $N_T=2$ transmit antennas. By shifting the start of the first pilot by an odd number Do, the channel can be estimated even if $D_f$ is even.

Sometimes a shift by Do of the start of the pilot grid may also not be desirable. In such a case, the transmitter can be slightly modified in accordance with a further aspect of the present invention.

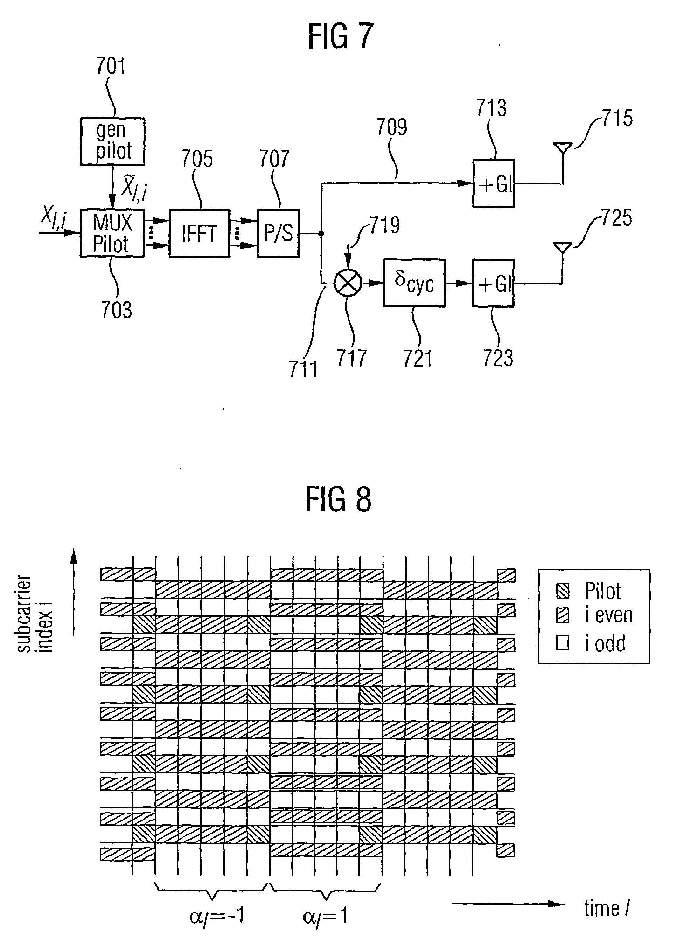

Fig. 7 shows a block diagram of an inventive CDD-OFDM transmitter which can support even pilot spacings $D_f$.

The inventive CDD-OFDM transmitter of Fig. 7 comprises a pilot generator 701 coupled to a multiplexer 703. The multiplexer 703 has an input for receiving data sequence and a plurality of outputs coupled to an IFFT transformer 705. The IFFT transformer 705 has a plurality of outputs coupled to a parallel-to-serial converter 707 (P/S). A signal path determined by an output of the parallel-to-serial converter 707 is divided into a first signal path 709 and a second signal path 711.

The first signal path 709 is coupled to a guard insertion block 713 having an output coupled to a first transmit antenna 715.

The second signal path 711 is coupled to an input of a multiplier 717, the multiplier 717 having a further input 719 and an output coupled to a delay element 721. The delay element 721 is coupled via a guard insertion block 723 to a second transmit antenna 725.

The inventive transmitter shown in Fig. 7 differs from the CDD-OFDM transmitter shown in Fig. 12 by a multiplication with an antenna dependent complex constant $\alpha_1^{(\mu)}$ provided to the further input 719 of the multiplier 717. In accordance with the present invention, the antenna dependent complex constant changes once every $D_T$ OFDM symbols.

For maximum cyclic delays $\delta_{cyc} = N_{FFT} / N_T$, a possible value for this complex constant is $\alpha_1^{(\mu)} = e^{-j2\pi(\mu-1)/N} T_L^{\lfloor 1/D_f \rfloor}$.

For the example with $N_T=2$ and an even $D_f$, the antenna dependent constant may be set $\alpha_1^{(1)} = 1$ for the first antenna 715 and $\alpha_1^{(2)} = (-1)^{\lfloor 1/D_t \rfloor} = \{\pm 1\}$ for the second antenna 725.

The effect on the received signal is demonstrated in Fig. 8 showing the inventive pilot grid structure with even $D_f$.

In accordance with the present invention, even and odd sets are shifted by one sub-carrier every $D_T$ OFDM symbols, which effectively is having the same effect as a shift of the pilots by Do. It is to be noted that $\alpha_1^{(\mu)}$ is a constant for $D_T$ OFDM symbols. Furthermore, for two transmit antennas, $\alpha_1^{(2)}$ only negates the input sequence on the second antenna, that means that a sign of input sequence values is converted.

In accordance with the present invention, the pilot offset Do and the antenna dependent multiplication by $\alpha_1^{(\mu)}$ at the transmitter, virtually any regular pilot grid can be supported.

The present invention further provides an apparatus for providing $N_T$ pilot sequences from an origin pilot sequence for channel estimation, wherein each pilot sequence is to be transmitted by an associated transmitting point of $N_T$ transmitting points.

The present invention further provides an apparatus for generating $N_t$ pilot sequences from an origin pilot sequence, as has been explained above. The $N_t$ pilot sequences are to be transmitted by $N_t$ transmitting points, wherein a $\mu^{th}$ pilot sequence of the $N_t$ pilot sequence is to be transmitted by a $\mu^{th}$ transmitting point of $N_t$ transmitting points.

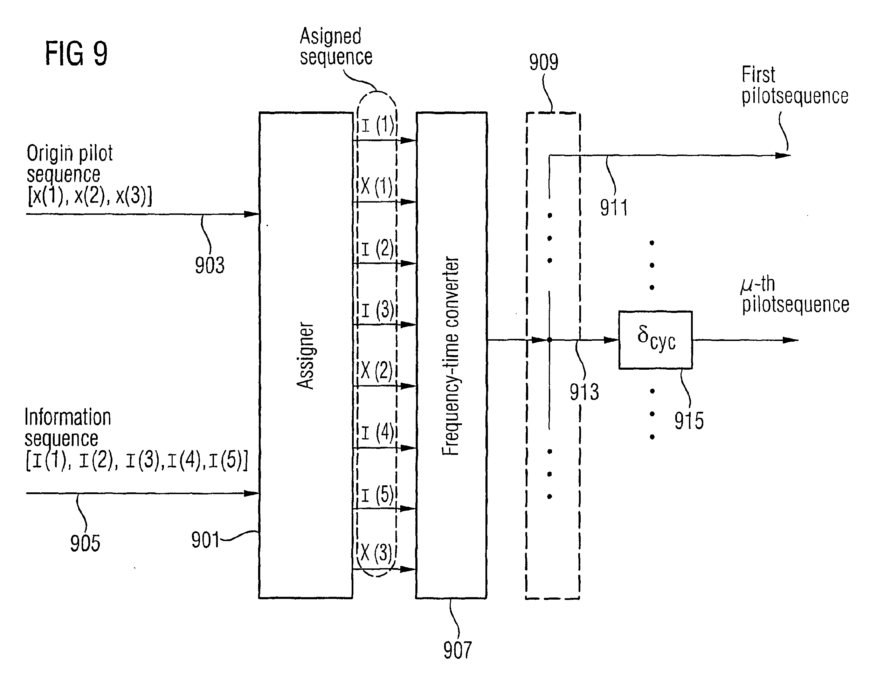

Fig. 9 shows a block diagram of the inventive apparatus for generating $N_t$ pilot sequences. The apparatus comprises an assigner 901 having a first input 903 and a second input 905. The assigner 901 has a plurality of outputs coupled to a frequency-time converter 907. The frequency-time converter 907 has an output coupled to a means 909 for providing a $\mu^{th}$ copy of a converted sequence provided by the frequency-time converter 907. The means for providing the $\mu^{th}$ copy is operative for dividing a signal path defined by the output of the frequency-time converter 907 into a plurality of signal paths, wherein in Fig. 9, by the way of example only, a first signal path 911 and a $\mu^{th}$ signal path 913 are depictive. The $\mu^{th}$ signal path 913 is coupled to a means 915 for cyclically delaying (delay element) which has an output.

The apparatus shown in Fig. 9 is operative for processing an information signal provided via the second input 905 and the origin pilot sequence provided via the first input 903 in accordance with a cyclic delay diversity scheme, wherein both sequences are depicted in Fig. 9. By the way of example only, in Fig. 9 the case of $D_f = 3$ is considered. As is depicted in Fig. 9, the subsequent values of the origin pilot sequence are assigned to every $D_f^{th}$ sub-carrier, wherein the successive values of the information sequence are assigned to the remaining sub-carriers. In other words, the inventive assigner 901 performs a multiplexing operation. As is shown in Fig. 9, the assigned sequence is provided via the plurality of outputs of the assigner 901. After time-frequency conversion and an optional parallel-to-serial conversion, a plurality of copies of the converted sequence are provided.

It is to be noted that the inventive apparatus shown in Fig. 9 may also be operative for assigning only subsequent values of the origin pilot sequence. In this case, $D_f = 1$.

As is depicted in Fig. 9, the converted sequence is common to all $N_t$ pilot sequences. In other words, the inventive apparatus is operative for providing a plurality of pilot sequences from a single origin pilot sequence using a single time-frequency converter, which can be for example a single Fourier transformer, for example an IFFT transformer being operative for performing a single IFFT transform. For example, the means 909 for providing the $\mu^{th}$ copy may be operative for providing a plurality of copies of the converted sequence, as is depicted in Fig. 9. By the way of example only, the means 909 for providing the $\mu^{th}$ copy may be operative for providing the converted sequence for a first copy of the converted sequence as a first pilot sequence of $N_t$ pilot sequences and, simultaneously, for providing the $\mu^{th}$ copy of the converted sequence to be used for providing the $\mu^{th}$ pilot sequence.

As it is depicted in Fig. 9, the $N_t$ pilot sequences are based on the same origin pilot sequence or, in other words, are derived from the same converted sequence. In order to provide pilot sequences from the same converted sequence so that received version of the pilot sequences are separable at a receiver, the copies of the converted sequence are processed in such a way, that spectral representations of the resulting pilot sequences occupy different spectral regions, as has been mentioned above. For example, a spectral representation of the $\mu^{th}$ pilot sequence occupies a band-pass spectral region, and the spectral representation of the first pilot sequence occupies a base band spectral region or a further band-pass region, so that both spectral regions do not overlap. As has been explained above, this characteristic can be exploited by the inventive channel estimator, wherein a simple band-pass filter applied for filtering the spectral representations may be used in order to obtain channel estimates.

In order to provide separable training sequences, the presented invention applies predetermined cyclic delays. Optionally, different pilot spacings $D_f$ can be used. To be more specific, the inventive means 915 for cyclically delaying is operative for cyclically delaying the $\mu^{th}$ copy of the converted sequence by a delay value which is dependent on $D_f$, or wherein the assigner is operative for using a pilot spacing being dependent on the cyclic delay value. In other words, $D_f$ depends on the delay factor.

In accordance with the present invention, the delay factor or $D_f$ are chosen such that, for example a spectral representation of the $\mu^{th}$ pilot sequence is multiplied by a phase shift sequence, for example +1, -1 etc., which introduces the up-converting effect described above.

More specifically, the means 915 for cyclically delaying is operative for cyclically delaying the $\mu^{th}$ copy of the converted sequence by a delay factor which may be obtained from the following equation

$$\delta_{cyc}^{(\mu)} = N_{FFT}\varphi(\mu)/2\pi D_f(\mu-1)$$

to obtain the $\mu^{th}$ pilot sequence, wherein

$$\varphi(\mu) \bmod 2\pi \in \left\{ 0, \frac{2\pi}{N_T}, 2 \cdot \frac{2\pi}{N_T}, \cdots, (N_T - 1) \cdot \frac{2\pi}{N_T} \right\}$$

or wherein the inventive assigner 901 is operative for assigning subsequent values of the origin pilot sequence to every $D_f^{th}$ sub-carrier, wherein $D_f$ is obtained from the following equation

$$D_f = \frac{kN_{FFT}}{N_T \delta_{cyc}}$$

wherein k is chosen such that a greatest common divisor GCD is

$$GCD(k, N_T) = 1$$

For example, the delay factor is fixed. In this case, the inventive assigner 901 may be operative for choosing $D_f$ such that, as a result, a spectral representation of the $\mu^{th}$ pilot sequence is, for example, up-converted to the band-pass spectral region.

For a fixed $D_F$, the inventive means 915 for cyclically delaying may operative for delaying the $\mu^{th}$ copy of the converted sequence such that a spectral representation of the $\mu^{th}$ pilot sequence occupies, by the way of example only, the previously mentioned band-pass spectral region.

In accordance with a further aspect of the present invention, the inventive assigner 901 and the inventive means 915 for cyclically delaying may cooperate with each other. To be more specific, the assigner 901 and the means 915 for cyclically delaying may adjust $D_f$ and the delay value such that the desired effect is introduced even if possible values for $D_f$ and possible values for the cyclic delay value are limited.

Referring again to the embodiment of Fig. 6 $D_f$ may be even, which is associated with the above mentioned problems. In order to cover both, even numbered and odd-numbered sub-carriers, the inventive assigner 901 may be operative for assigning subsequent values of the origin pilot sequence to every $D_f^{th}$ sub-carrier starting with, for example, an odd-numbered sub-carrier at a time-instant, at which pilots are transmitted, and for assigning the subsequent values of the origin pilot sequence to every $D_f^{th}$ sub-carrier starting with an even-numbered sub-carrier at a following time-instant, at which further are transmitted, or vice versa. In other words, the inventive assigner 901 introduces a numbering shift, so that the pilots are assigned to even and odd sub-carriers at different time-instants.

Referring again to the embodiment of Fig. 7, the means 909 for providing the $\mu^{th}$ copy may comprise the multiplier 717 for multiplying the $\mu^{th}$ copy of the converted sequence by a multiplying factor to provide a multiplied copy as the $\mu^{th}$ copy of the converted sequence. As has been explained above, the multiplying factor may be antenna dependent, i.e., dependent on a numbering index associated with, for example, the $\mu^{th}$ copy. For example, the numbering index may be equal to p. In other words, the effect depicted in Fig. 8 is introduced, as has been explained above. More specifically, the multiplier may be operative for multiplying the $\mu^{th}$ copy of the converted sequence to obtain the $\mu^{th}$ pilot sequence to be transmitted at a $l^{th}$ time instant by the multiplying factor

$$\alpha_l^{(\mu)} = e^{-j2\pi(\mu-1)/N_T \lfloor l / D_t \rfloor}$$

wherein $D_t$ denotes a time spacing between the $l^{th}$ time instant and a $(1+1)^{th}$ time instant.

It is to be noted that the (cyclic) delay element 915 may be a cyclic shift element. Hence, the delay element 915 (shift element) may be operative for cyclically shifting the $\mu^{th}$ copy with respect to the converted sequence by the above factor. Furthermore, the means 909 for providing the $\mu^{th}$ copy may comprise a copier for providing $N_T$ copies of the converted sequence in order to provide the $N_T$ copies to the associated signal paths.

Additionally, it is to be noted that the bandpass filter 103 in Fig. 1 can be implemented as any device having a bandpass characteristic, therefore, the bandpass filter can also be a Wiener filter having a band pass characteristic. Furthermore, the center frequency does not necessarily have to be in the exact center of the pass band. In case of asymmetric filters whose equivalent low pass representation only includes positive rather than negative frequencies, the center frequency in terms of the present document is at the border of the pass band. Thus, any frequency in the pass band of the band pass filter is to be regarded as the center frequency as long as the filter passband overlaps the spectral region of the pilot sequence.

Depending on certain implementation requirements of the inventive methods, the inventive methods can be implemented in hardware or in software. The implementation can be performed using a digital storage medium, in particular a disc or a CD having electronically readable control signals stored thereon, which can co-operate with a programmable computer system, such that the inventive methods are performed. Generally, the present invention is, therefore, a computer program product with a program code stored on a machine-readable carrier, the program code being operative for performing the inventive methods, when the computer program product runs on a computer. In other words, the inventive methods are, therefore, a computer program having a program code for performing the inventive methods, when the computer program runs on a computer.

**Claims**

1. Channel estimator configured for estimating a channel transfer function of a communication channel from a receive signal including a pilot sequence being transmittable from a transmitting point to a receiving point through the communication channel, wherein the pilot sequence is designed such that a spectral representation of the pilot sequence is a sequence having a spectrum, the spectrum occupying a band-pass spectral region having a predetermined center frequency, the channel estimator comprising the following features:

   a time-frequency converter (101) for time-frequency converting the receive signal to obtain the spectral representation of the receive signal; and
   a band-pass filter (103) having the predetermined center frequency, the band-pass filter (103) being configured for filtering the spectral representation of the receive signal to obtain a filtered transformed signal, wherein the filtered transformed signal comprises an estimate of the channel transfer function, wherein the band-pass filter (103) is operative to filter the spectral representation such that in the spectrum of the spectral representation the band-pass spectral region having the predetermined center frequency is output.

2. Channel estimator in accordance with claim 1, wherein the time-frequency converter (101) comprises a Fourier transformer for time-frequency conversion of the receive signal.

3. Channel estimator in accordance with any of the preceding claims 1 to 2, wherein the pilot sequence results from a frequency-time conversion of a multi-carrier sequence, the multi-carrier sequence being obtained from assigning successive values of an origin sequence to every $D_f^{th}$ sub-carrier of a plurality of successive sub-carriers of a multi-carrier modulation scheme, wherein the time-frequency converter (101) further comprises a selector for selecting every $D_f^{th}$ value of a time-frequency converted version of the receive signal to obtain the spectral representation of the receive signal.

4. Channel estimator in accordance with claim 3, wherein the origin sequence comprises a scrambling sequence, wherein the time-frequency converter (101) comprises a multiplier for multiplying the spectral representation of the receive signal by a complex conjugate version of the scrambling sequence to provide a de-scrambled sequence as the spectral representation of the receive signal.

5. Channel estimator in accordance with claims 1 to 4, wherein the spectral representation of the receive signal is a set of parallel values, wherein the time-frequency converter (101) comprises a parallel-to-serial converter for providing the spectral representation of the receive signal as a set of serial values.

6. Channel estimator in accordance with any of the preceding claims 1 to 5, wherein the band-pass filter is a digital filter comprising a superposition of a set of coefficients for band-pass filtering the spectral representation of the receive signal, and a further set of coefficients for down-converting a filtered version of the spectral representation to a base-band spectral region to provide the filtered transformed signal, wherein the filtered transformed signal is the estimate of the channel transfer function.

7. Channel estimator in accordance with any of the further preceding claims 1 to 6, wherein the filtered transformed signal is a band-pass signal, and wherein the channel estimator comprises a down-converter for down-converting the filtered transformed signal to a base-band spectral region to obtain a down-converted signal, wherein the down-converted signal is the estimate of the channel transfer function.

8. Channel estimator in accordance with any of the preceding claims 1 to 7, wherein the band-pass filter (103) is a digital filter comprising a set of filter coefficients for band-pass filtering, wherein the band-pass filter (103) is tuneable with respect to the predetermined center frequency, and wherein the channel estimator comprises means for tuning the band-pass filter.

9. Channel estimator in accordance with claim 8, wherein the means for tuning the band-pass filter comprises means for providing a set of filter coefficients in dependence of the predetermined center frequency.

10. Channel estimator in accordance with claim 9, wherein the means for providing the set of filter coefficients is operative for calculating the set of filter coefficients in dependence of the predetermined center frequency.

11. Channel estimator in accordance with claim 9 or 10, wherein the means for providing the set of filter coefficients comprises a filter memory for storing a plurality of sets of filter coefficients in dependence of a plurality of predetermined center frequencies.

12. Channel estimator in accordance with any of the preceding claims 1 to 11, wherein the band-pass filter (103) is further operative for interpolating between adjacent values of the filtered transformed signal to provide a frequency interpolated filtered transformed signal as the filtered transformed signal.

13. Channel estimator in accordance with any of the preceding claims 1 to 12, wherein the band-pass filter (103) is further operative for interpolating between corresponding values of the filtered transformed signal at a first time instant and values of a further filtered transformed signal at a second time instant to obtain a time-interpolated filtered transformed signal as the filtered transformed signal.

14. Channel estimator in accordance with any other preceding claims 1 to 13, wherein the receive signal includes a superposition of the pilot sequence and of a further pilot sequence being transmittable from a further transmitting point to the receiving point through a further communication channel, wherein the further pilot sequence is designed such that a spectral representation of the further pilot sequence occupies a further spectral region having a further center frequency, wherein the further center frequency is different from the predetermined center frequency, wherein the channel estimator further comprises a further filter having the further predetermined center frequency for filtering the spectral representation of the receive signal to obtain a further filtered transformed signal in order to obtain an estimate of a further channel transfer function of the further communication channel.

15. Channel estimator in accordance with claim 14 wherein the further spectral region is a base-band spectral region, wherein the further filter is a low-pass filter, and wherein the further filtered transformed signal is the estimate of the further channel transfer function.

16. Channel estimator in accordance with claim 14, wherein the further spectral region is a further band-pass spectral region, and wherein the further filter is a further band-pass filter having the further predetermined center frequency being different from the predetermined center frequency.

17. Channel estimator in accordance with claim 16, further comprising a further down-converter for down-converting the further filtered transformed signal from the further band-pass spectral region to the base-band region to obtain a further down-converted signal, wherein the further down-converted signal is the further estimate of the further channel transfer function.

18. Channel estimator in accordance with claims 14 to 17, further comprising an adder for adding the filtered transformed signal and the further filtered transformed signal to obtain an estimate of an effective channel transfer function comprising a superposition of the estimate of the channel transfer function and the estimate of the further channel transfer function.

19. Channel estimator in accordance with claims 15 to 17, further comprising:

    an up-converter for up-converting the estimate of the channel transfer function to obtain an estimate of the channel transfer function in the band-pass spectral region; and

an adder for adding the estimate of the channel transfer function and the estimate of the further channel transfer function to obtain an estimate of an effective channel transfer function comprising a superposition of the estimate of the channel transfer function in the band-pass spectral region and the estimate of the further channel transfer function.

**20.** Channel estimator in accordance with claim 18 or 19, wherein the pilot sequence results from a frequency-time conversion of a multi-carrier sequence, the multi-carrier sequence being obtained from assigning successive values of an origin sequence to every $D_f{}^{th}$ sub-carrier of a plurality of successive sub-carriers, wherein the estimate of the channel transfer function has a phase error depending on $D_f$, and wherein the channel estimator comprises means for correcting the phase error of the estimate of a channel transfer function, wherein the means for correcting is operative to multiply the estimate of the channel transfer function by a phase sequence.

**21.** Apparatus for generating $N_T$ pilot sequences from an origin pilot sequence, the $N_T$ pilot sequences to be transmitted by $N_T$ transmitting points, wherein a $\mu^{th}$ pilot sequence of the $N_T$ pilot sequences is to be transmitted by a $\mu^{th}$ transmitting point of $N_T$ transmitting points, the apparatus comprising:

an assigner (901) for assigning subsequent values of the origin pilot sequence to every $D_f{}^{th}$ sub-carrier of a multi-carrier modulation scheme using a number of sub-carriers to obtain an assigned sequence;
a frequency-time converter (907) for converting the assigned sequence into a converted sequence;
means (909) for providing a $\mu^{th}$ copy of the converted sequence;
means (915) for cyclically delaying the $\mu^{th}$ copy of the converted sequence to obtain the $\mu^{th}$ pilot sequence;

**characterised in that**
the means (915) for cyclically delaying is operative for cyclically delaying The $\mu^{th}$ copy of the converted sequence by a delay value which is dependent on $D_f$, or $D_f$ is a pilot spacing, which is dependent on the delay value, and

$$D_f \leq \frac{T}{N_T \max_\mu \{\tau_{\max}^{(\mu)}\}}$$

where T denotes the OFDM symbol duration and where $\max_\mu \{\tau_{\max}^{(\mu)}\}$ is a maximum delay of $N_T$ superimposed channels, which is determined by the total maximum of the individual maximum channel delays.

**22.** Apparatus in accordance with claim 21, wherein all channels are assumed to have a similar maximum delay $\tau_{\max} \approx \tau_{\max}^{(\mu)}$:

**23.** Apparatus in accordance with claim 21 or 22, wherein the maximum delay is defined by

$$\tau_{\max} < \delta_{cyc} T_{spl}$$

where $T_{spl}$ denotes a sampling duration and where $\delta_{cyc}$ denotes a cyclic delay parameter.

**24.** Apparatus in accordance with one of the claims 21 to 23, wherein the time-frequency converter (907) has an output coupled to an input of the means (909) for providing the $\mu^{th}$ copy of the converted sequence.

**25.** Apparatus in accordance with on of the claims 21 to 24, wherein the means (909) for providing the $\mu^{th}$ copy is operative for providing the converted sequence or a copy of the converted sequence as a first pilot sequence of $N_T$ pilot sequences.

**26.** Apparatus in accordance with claims 21 to 25, wherein the converted sequence is common for the $N_T$ pilot sequences.

27. Apparatus in accordance with claims 21 to 26, wherein the means (915) for cyclically delaying is operative for cyclically delaying the $\mu^{th}$ copy of the converted sequence by a delay factor depending on $D_f$, wherein the delay factor $\delta_{cyc}^{(\mu)}$ for the $\mu^{th}$ copy is obtained from the following equation:

$$\delta_{cyc}^{(\mu)} = N_{FFT}\varphi(\mu)/2\pi D_f(\mu-1)$$

to obtain the $\mu^{th}$ pilot sequence, wherein

$$\varphi(\mu) \bmod 2\pi \in \left\{0, \frac{2\pi}{N_T}, 2\cdot\frac{2\pi}{N_T}, \cdots, (N_T-1)\cdot\frac{2\pi}{N_T}\right\}$$

and $N_{FFT}$ is the number of points of an inverse DFT used by the frequency-time converter (907) or wherein the assigner (901) is operative for assigning subsequent values of the origin pilot sequence to every $D_f^{th}$ sub-carrier, wherein $D_f$ is a pilot spacing depending on the delay factor, wherein $D_f$ is obtained from the following equation:

$$D_f = \frac{kN_{FFT}}{N_T\delta_{cyc}}$$

wherein k is chosen such that a greatest common divisor GCD is

$$GCD(k, N_T) = 1$$

28. Apparatus in accordance with claims 21 to 27, wherein the time-frequency converter (907) is single Fourier transformer being operative for performing a single Fourier transform.

29. Apparatus in accordance with claims 21 to 28, wherein $D_f$ is even, and wherein the assigner (901) is operative for assigning subsequent values of the origin pilot sequence to every $D_f^{th}$ sub-carrier starting with an odd numbered sub-carrier at a first time instant, and for assigning the subsequent values of the origin pilot sequence to every $D_f^{th}$ sub-carrier starting with an even numbered sub-carrier at a second time instant following the first time instant, or vice versa.

30. Apparatus in accordance with claims 21 to 29, wherein the means (909) for providing the $\mu^{th}$ copy comprises a multiplier (717) for multiplying the $\mu^{th}$ copy of the converted sequence by a multiplying factor to provide a multiplied copy as the $\mu^{th}$ copy of the converted sequence, wherein the multiplying factor is dependent on a numbering index associated with the $\mu^{th}$ copy of the converted sequence.

31. Apparatus in accordance with claim 30, wherein the multiplier (717) is operative for multiplying the $\mu^{th}$ copy of the converted sequence to obtain the $\mu^{th}$ pilot sequence to be transmitted at a $l^{th}$ time-instant by the multiplying factor

$$\alpha_l^{(\mu)} = e^{-j2\pi(\mu-1)/N_T\lfloor l/D_t\rfloor},$$

wherein $D_t$ denotes a time-spacing between the $l^{th}$ time-instant and a $(1+1)^{th}$ time-instant.

32. Method for estimating a channel transfer function of a communication channel from a receive signal including a pilot sequence being transmittable from a transmitting point to a receiving point through the communication channel, wherein the pilot sequence is designed such that a spectral representation of the pilot sequence is a sequence having a spectrum, the spectrum occupying a band-pass spectral region having a predetermined center frequency, the method comprising the following steps:

Time-frequency converting the receive signal to obtain the spectral representation of the receive signal; and Band-pass filtering the spectral representation of the receive signal with respect to the predetermined center frequency to obtain a filtered transformed signal, wherein the filtered transformed signal comprises an estimate of the channel transfer function, wherein the band-pass filter (103) is operative to filter the spectral representation such that in the spectrum of the spectral representation the band-pass spectral region having the predetermined center frequency is output.

33. Method for generating $N_t$ pilot sequences from an origin pilot sequence, the $N_t$ pilot sequences to be transmitted by $N_t$ transmitting points, wherein a $\mu^{th}$ pilot sequence of the $N_t$ pilot sequence is to be transmitted by a $\mu^{th}$ transmitting point of $N_t$ transmitting points, the method comprising the following steps:

Assigning subsequent values of the origin pilot sequence to every $D_f^{th}$ sub-carrier of a multi-carrier modulation scheme using a number of sub-carriers to obtain an assigned sequence;
Frequency-time converting the assigned sequence into a converted sequence;
Providing a $\mu^{th}$ copy of the converted sequence;
Cyclically delaying the $\mu^{th}$ copy of the converted sequence by a delay value to obtain the $\mu^{th}$ pilot sequence.

**characterised in that** the delay value is dependent on $D_f$, or **in that** $D_f$ is a pilot spacing, which is dependent on the delay value, and

$$D_f \leq \frac{T}{N_T \max_\mu \{\tau_{\max}^{(\mu)}\}}$$

where T denotes the OFDM symbol duration and where $\max_\mu \left\{ \tau_{\max}^{(\mu)} \right\}$ is a maximum delay of $N_T$ superimposed channels, which is determined by the total maximum of the individual maximum channel delays.

34. Computer program having a program code adapted to perform the method in accordance with claim 30 or 31, when the program code runs on a computer.

**Patentansprüche**

1. Kanalschätzer, der dahin gehend konfiguriert ist, eine Kanalübertragungsfunktion eines Kommunikationskanals von einem Empfangssignal zu schätzen, das eine Pilotsequenz umfasst, die von einem Sendepunkt durch den Kommunikationskanal an einen Empfangspunkt gesendet werden kann, wobei die Pilotsequenz derart entworfen ist, dass eine Spektraldarstellung der Pilotsequenz eine Sequenz ist, die ein Spektrum aufweist, wobei das Spektrum eine Bandpass-Spektralregion belegt, die eine vorbestimmte Mittenfrequenz aufweist, wobei der Kanalschätzer folgende Merkmale aufweist:

einen Zeit-Frequenz-Wandler (101) zum Zeit-Frequenz-Umwandeln des Empfangssignals, um die Spektraldarstellung des Empfangssignals zu erhalten; und
ein Bandpassfilter (103), das die vorbestimmte Mittenfrequenz aufweist, wobei das Bandpassfilter (103) dahin gehend konfiguriert ist, die Spektraldarstellung des Empfangssignals zu filtern, um ein gefiltertes transformiertes Signal zu erhalten, wobei das gefilterte transformierte Signal eine Schätzung der Kanalübertragungsfunktion aufweist, wobei das Bandpassfilter (103) dahin gehend wirksam ist, die Spektraldarstellung derart zu filtern, dass in dem Spektrum der Spektraldarstellung die Bandpassspektralregion, die die vorbestimmte Mittenfrequenz aufweist, ausgegeben wird.

**2.** Kanalschätzer gemäß Anspruch 1, bei dem der Zeit-Frequenz-Wandler (101) einen Fourier-Transformierer zur Zeit-Frequenz-Umwandlung des Empfangssignals aufweist.

**3.** Kanalschätzer gemäß einem der vorhergehenden Ansprüche 1 bis 2, bei dem sich die Pilotsequenz aus einer Frequenz-Zeit-Umwandlung einer Mehrträgersequenz ergibt, wobei die Mehrträgersequenz aus einem Zuweisen von aufeinander folgenden Werten einer Ursprungssequenz zu jedem $D_f$-ten Teilträger einer Mehrzahl von aufeinander folgenden Teilträgern eines Mehrträgermodulationsschemas erhalten wird, wobei der Zeit-Frequenz-Wandler (101) ferner einen Selektor zum Auswählen jedes $D_f$-ten Wertes einer Zeit-Frequenz-umgewandelten Version des Empfangssignals, um die Spektraldarstellung des Empfangssignals zu erhalten, umfasst.

**4.** Kanalschätzer gemäß Anspruch 3, bei dem die Ursprungssequenz eine Verwürfelungssequenz aufweist, wobei der Zeit-Frequenz-Wandler (101) einen Multiplizierer zum Multiplizieren der Spektraldarstellung des Empfangssignals mit einer konjugiert komplexen Version der Verwürfelungssequenz, um als die Spektraldarstellung des Empfangssignals eine entwürfelte Sequenz zu liefern, umfasst.

**5.** Kanalschätzer gemäß den Ansprüchen 1 bis 4, bei dem die Spektraldarstellung des Empfangssignals ein Satz paralleler Werte ist, wobei der Zeit-Frequenz-Wandler (101) einen Parallel-Zu-Seriell-Wandler zum Liefern der Spektraldarstellung des Empfangssignals als einen Satz serieller Werte umfasst.

**6.** Kanalschätzer gemäß einem der vorhergehenden Ansprüche 1 bis 5, bei dem das Bandpassfilter ein digitales Filter ist, das eine Überlagerung eines Satzes von Koeffizienten zum Bandpassfiltern der Spektraldarstellung des Empfangssignals und eines weiteren Satzes von Koeffizienten zum Heruntermischen einer gefilterten Version der Spektraldarstellung zu einer Basisband-Spektralregion, um das gefilterte transformierte Signal zu liefern, wobei das gefilterte transformierte Signal die Schätzung der Kanalübertragungsfunktion ist, umfasst.

**7.** Kanalschätzer gemäß einem der weiteren vorhergehenden Ansprüche 1 bis 6, bei dem das gefilterte transformierte Signal ein Bandpasssignal ist und bei dem der Kanalschätzer einen Heruntermischer zum Heruntermischen des gefilterten transformierten Signals auf eine Basisband-Spektralregion, um ein heruntergemischtes Signal zu erhalten, wobei das heruntergemischte Signal die Schätzung der Kanalübertragungsfunktion ist, umfasst.

**8.** Kanalschätzer gemäß einem der vorhergehenden Ansprüche 1 bis 7, bei dem das Bandpassfilter (103) ein digitales Filter ist, das einen Satz von Filterkoeffizienten zum Bandpassfiltern aufweist, wobei das Bandpassfilter (103) bezüglich der vorbestimmten Mittenfrequenz abstimmbar ist und wobei der Kanalschätzer eine Einrichtung zum Abstimmen des Bandpassfilters aufweist.

**9.** Kanalschätzer gemäß Anspruch 8, bei dem die Einrichtung zum Abstimmen des Bandpassfilters eine Einrichtung zum Liefern eines Satzes von Filterkoeffizienten in Abhängigkeit von der vorbestimmten Mittenfrequenz aufweist.

**10.** Kanalschätzer gemäß Anspruch 9, bei dem die Einrichtung zum Liefern des Satzes von Filterkoeffizienten dahin gehend wirksam ist, den Satz von Filterkoeffizienten in Abhängigkeit von der vorbestimmten Mittenfrequenz zu berechnen.

**11.** Kanalschätzer gemäß Anspruch 9 oder 10, bei dem die Einrichtung zum Liefern des Satzes von Filterkoeffizienten einen Filterspeicher zum Speichern einer Mehrzahl von Sätzen von Filterkoeffizienten in Abhängigkeit von einer Mehrzahl von vorbestimmten Mittenfrequenzen aufweist.

**12.** Kanalschätzer gemäß einem der vorhergehenden Ansprüche 1 bis 11, bei dem das Bandpassfilter (103) ferner dahin gehend wirksam ist, zwischen benachbarten Werten des gefilterten transformierten Signals zu interpolieren, um als das gefilterte transformierte Signal ein frequenzinterpoliertes, gefiltertes transformiertes Signal zu liefern.

**13.** Kanalschätzer gemäß einem der vorhergehenden Ansprüche 1 bis 12, bei dem das Bandpassfilter (103) ferner dahin gehend wirksam ist, zwischen entsprechenden Werten des gefilterten transformierten Signals zu einem ersten Zeitpunkt und Werten eines weiteren gefilterten transformierten Signals zu einem zweiten Zeitpunkt zu interpolieren, um als das gefilterte transformierte Signal ein zeitlich interpoliertes, gefiltertes transformiertes Signal zu erhalten.

**14.** Kanalschätzer gemäß einem anderen der vorhergehenden Ansprüche 1 bis 13, bei dem das Empfangssignal eine Überlagerung der Pilotsequenz und einer weiteren Pilotsequenz umfasst, die von einem weiteren Sendepunkt durch einen weiteren Kommunikationskanal an den Empfangspunkt gesendet werden kann, wobei die weitere Pilotsequenz derart entworfen ist, dass eine Spektraldarstellung der weiteren Pilotsequenz eine weitere Spektralregion, die eine weitere Mittenfrequenz aufweist, belegt, wobei sich die weitere Mittenfrequenz von der vorbestimmten Mittenfrequenz unterscheidet, wobei der Kanalschätzer ferner ein weiteres Filter aufweist, das die weitere vorbestimmte Mittenfrequenz zum Filtern der Spektraldarstellung des Empfangssignals aufweist, um ein weiteres gefiltertes transformiertes Signal zu erhalten, um eine Schätzung einer weiteren Kanalübertragungsfunktion des weiteren Kommunikationskanals zu erhalten.

15. Kanalschätzer gemäß Anspruch 14, bei dem die weitere Spektralregion eine Basisband-Spektralregion ist, bei dem das weitere Filter ein Tiefpassfilter ist und bei dem das weitere gefilterte transformierte Signal die Schätzung der weiteren Kanalübertragungsfunktion ist.

16. Kanalschätzer gemäß Anspruch 14, bei dem die weitere Spektralregion eine weitere Bandpass-Spektralregion ist und bei dem das weitere Filter ein weiteres Bandpassfilter ist, das die weitere vorbestimmte Mittenfrequenz aufweist, die sich von der vorbestimmten Mittenfrequenz unterscheidet.

17. Kanalschätzer gemäß Anspruch 16, der ferner einen weiteren Heruntermischer zum Heruntermischen des weiteren gefilterten transformierten Signals von der weiteren Bandpass-Spektralregion auf die Basisbandregion, um ein weiteres heruntergemischtes Signal zu erhalten, umfasst, wobei das weitere heruntergemischte Signal die weitere Schätzung der weiteren Kanalübertragungsfunktion ist.

18. Kanalschätzer gemäß den Ansprüchen 14 bis 17, der ferner einen Addierer zum Addieren des gefilterten transformierten Signals und des weiteren gefilterten transformierten Signals, um eine Schätzung einer effektiven Kanalübertragungsfunktion zu erhalten, die eine Überlagerung der Schätzung der Kanalübertragungsfunktion und der Schätzung der weiteren Kanalübertragungsfunktion aufweist, umfasst.

19. Kanalschätzer gemäß den Ansprüchen 15 bis 17, der ferner folgende Merkmale aufweist:

   einen Hochmischer zum Hochmischen der Schätzung der Kanalübertragungsfunktion, um eine Schätzung der Kanalübertragungsfunktion in der Bandpass-Spektralregion zu erhalten; und
   einen Addierer zum Addieren der Schätzung der Kanalübertragungsfunktion und der Schätzung der weiteren Kanalübertragungsfunktion, um eine Schätzung einer effektiven Kanalübertragungsfunktion zu erhalten, die eine Überlagerung der Schätzung der Kanalübertragungsfunktion in der Bandpass-Spektralregion und der Schätzung der weiteren Kanalübertragungsfunktion aufweist.

20. Kanalschätzer gemäß Anspruch 18 oder 19, bei dem sich die Pilotsequenz aus einer Frequenz-Zeit-Umwandlung einer Mehrträgersequenz ergibt, wobei die Mehrträgersequenz aus einem Zuweisen von aufeinander folgenden Werten einer Ursprungssequenz zu jedem $D_f$-ten Teilträger einer Mehrzahl von aufeinander folgenden Teilträgern erhalten wird, wobei die Schätzung der Kanalübertragungsfunktion einen von $D_f$ abhängigen Phasenfehler aufweist und wobei der Kanalschätzer eine Einrichtung zum Korrigieren des Phasenfehlers der Schätzung einer Kanalübertragungsfunktion aufweist, wobei die Einrichtung zum Korrigieren dahin gehend wirksam ist, die Schätzung der Kanalübertragungsfunktion mit einer Phasensequenz zu multiplizieren.

21. Vorrichtung zum Erzeugen von $N_T$ Pilotsequenzen aus einer ursprünglichen Pilotsequenz, wobei die $N_T$ Pilotsequenzen durch $N_T$ Sendepunkte gesendet werden sollen, wobei eine $\mu$.te Pilotsequenz der $N_T$ Pilotsequenzen durch einen $\mu$-ten Sendepunkt von $N_T$ Sendepunkten gesendet werden soll, wobei die Vorrichtung folgende Merkmale aufweist:

   einen Zuweiser (901) zum Zuweisen von nachfolgenden Werten der ursprünglichen Pilotsequenz zu jedem $D_f$-ten Teilträger eines Mehrträgermodulationsschemas unter Verwendung einer Anzahl von Teilträgern, um eine zugewiesene Sequenz zu erhalten;
   einen Frequenz-Zeit-Wandler (907) zum Umwandeln der zugewiesenen Sequenz in eine umgewandelte Sequenz;
   eine Einrichtung (909) zum Liefern einer $\mu$-ten Kopie der umgewandelten Sequenz;
   eine Einrichtung (915) zum zyklischen Verzögern der $\mu$-ten Kopie der umgewandelten Sequenz, um die $\mu$.te Pilotsequenz zu erhalten;

   **dadurch gekennzeichnet, dass** die Einrichtung (915) zum zyklischen Verzögern dahin gehend wirksam ist, die $\mu$-te Kopie der umgewandelten Sequenz um einen Verzögerungswert, der von $D_f$ abhängig ist, zyklisch zu verzögern, oder $D_f$ eine Pilotbeabstandung ist, die von dem Verzögerungswert abhängig ist, und

$$D_f \leq \frac{T}{N_T \, \max_\mu \left\{ \tau_{max}^{(\mu)} \right\}}$$

wobei T die OFDM-Symboldauer bezeichnet und wobei $\max_\mu \left\{ \tau_{max}^{(\mu)} \right\}$ eine maximale Verzögerung von $N_T$ überlagerten Kanälen ist, die durch das Gesamtmaximum der einzelnen maximalen Kanalverzögerungen bestimmt wird.

22. Vorrichtung gemäß Anspruch 21, bei der angenommen wird, dass alle Kanäle eine ähnliche maximale Verzögerung $\tau_{max} \approx \tau_{max}^{(\mu)}$ aufweisen.

23. Vorrichtung gemäß Anspruch 21 oder 22, bei der die maximale Verzögerung durch

$$\tau_{max} < \delta_{cyc} T_{spl}$$

definiert ist, wobei $T_{spl}$ eine Abtastdauer bezeichnet und wobei $\delta_{cyc}$ einen Zyklische-Verzögerung-Parameter bezeichnet.

24. Vorrichtung gemäß einem der Ansprüche 21 bis 23, bei der der Zeit-Frequenz-Wandler (907) einen mit einem Eingang der Einrichtung (909) gekoppelten Ausgang zum Liefern der $\mu$-ten Kopie der umgewandelten Sequenz aufweist.

25. Vorrichtung gemäß einem der Ansprüche 21 bis 24, bei der die Einrichtung (909) zum Liefern der $\mu$-ten Kopie dahin gehend wirksam ist, die umgewandelte Sequenz oder eine Kopie der umgewandelten Sequenz als eine erste Pilotsequenz von $N_T$ Pilotsequenzen zu liefern.

26. Vorrichtung gemäß den Ansprüchen 21 bis 25, bei der die umgewandelte Sequenz den $N_T$ Pilotsequenzen gemein ist.

27. Vorrichtung gemäß den Ansprüchen 21 bis 26, bei der die Einrichtung (915) zum zyklischen Verzögern dahin gehend wirksam ist, die $\mu$-te Kopie der umgewandelten Sequenz um einen von $D_f$ abhängigen Verzögerungsfaktor zyklisch zu verzögern, wobei der Verzögerungsfaktor $\delta_{cyc}^{(\mu)}$ für die $\mu$-te Kopie aus der folgenden Gleichung erhalten wird:

$$\delta_{cyc}^{(\mu)} = N_{FFT} \, \varphi(\mu) / 2\pi D_f (\mu - 1)$$

um die $\mu$-te Pilotsequenz zu erhalten, bei der

$$\varphi(\mu) \bmod 2\pi \in \left\{ 0, \frac{2\pi}{N_T}, 2 \cdot \frac{2\pi}{N_T}, ..., (N_T - 1) \cdot \frac{2\pi}{N_T} \right\}$$

und $N_{FFT}$ die Anzahl von Punkten einer inversen DFT ist, die durch den Frequenz-Zeit-Wandler (907) verwendet wird, oder bei der der Zuweiser (901) dahin gehend wirksam ist, nachfolgende Werte der ursprünglichen Pilotsequenz zu jedem $D_f$-ten Teilträger zuzuweisen, wobei $D_f$ eine Pilotbeabstandung ist, die von dem Verzögerungsfaktor abhängt, wobei $D_f$ aus der folgenden Gleichung erhalten wird:

$$D_f = \frac{kN_{FFT}}{N_T \delta_{cyc}}$$

wobei k so gewählt ist, dass ein größter gemeinsamer Teiler GCD

$$GCD(k, N_T) = 1$$

lautet.

28. Vorrichtung gemäß den Ansprüchen 21 bis 27, bei der der Zeit-Frequenz-Wandler (907) ein einzelner Fourier-Transformierer ist, der dahin gehend wirksam ist, eine einzelne Fourier-Transformation durchzuführen.

29. Vorrichtung gemäß den Ansprüchen 21 bis 28, bei der $D_f$ gerade ist und bei der der Zuweiser (901) dahin gehend wirksam ist, nachfolgende Werte der ursprünglichen Pilotsequenz beginnend bei einem ungeradzahligen Teilträger zu einem ersten Zeitpunkt jedem $D_f$-ten Teilträger zuzuweisen, und die nachfolgenden Werte der ursprünglichen Pilotsequenz beginnend mit einem geradzahligen Teilträger zu einem zweiten Zeitpunkt, der auf den ersten Zeitpunkt folgt, jedem $D_f$-ten Teilträger zuzuweisen, oder umgekehrt.

30. Vorrichtung gemäß den Ansprüchen 21 bis 29, bei der die Einrichtung (909) zum Liefern der $\mu$-ten Kopie einen Multiplizierer (717) zum Multiplizieren der $\mu$-en Kopie der umgewandelten Sequenz mit einem Multiplikationsfaktor, um eine multiplizierte Kopie als die $\mu$.te Kopie der umgewandelten Sequenz zu erhalten, umfasst, wobei der Multiplikationsfaktor von einem Nummerierungsindex abhängig ist, der der $\mu$-ten Kopie der umgewandelten Sequenz zugeordnet ist.

31. Vorrichtung gemäß Anspruch 30, bei der der Multiplizierer (717) dahin gehend wirksam ist, die $\mu$-te Kopie der umgewandelten Sequenz zu multiplizieren, um die $\mu$-te Pilotsequenz zu erhalten, die zu einem l-ten Zeitpunkt durch den Multiplikationsfaktor

$$\alpha_l^{(\mu)} = e^{-j2\pi(\mu-1)/N_T \lfloor l/D_t \rfloor},$$

gesendet werden soll, wobei $D_t$ einen zeitlichen Abstand zwischen dem 1-ten Zeitpunkt und einem (l+1)-ten Zeitpunkt bezeichnet.

32. Verfahren zum Schätzen einer Kanalübertragungsfunktion eines Kommunikationskanals von einem Empfangssignals, das eine Pilotsequenz umfasst, die von einem Sendepunkt durch den Kommunikationskanal an einen Empfangspunkt gesendet werden kann, wobei die Pilotsequenz derart entworfen ist, dass eine Spektraldarstellung der Pilotsequenz eine Sequenz ist, die ein Spektrum aufweist, wobei das Spektrum eine Bandpass-Spektralregion belegt, die eine vorbestimmte Mittenfrequenz aufweist, wobei das Verfahren die folgenden Schritte umfasst:

Zeit-Frequenz-Umwandeln des Empfangssignals, um die Spektraldarstellung des Empfangssignals zu erhalten; und
Bandpassfiltern der Spektraldarstellung des Empfangssignals bezüglich der vorbestimmten Mittenfrequenz, um ein gefiltertes transformiertes Signal zu erhalten, wobei das gefilterte transformierte Signal eine Schätzung der Kanalübertragungsfunktion aufweist, wobei das Bandpassfilter (103) dahin gehend wirksam ist, die Spektraldarstellung derart zu filtern, dass in dem Spektrum der Spektraldarstellung die Bandpass-Spektralregion, die die vorbestimmte Mittenfrequenz aufweist, ausgegeben wird.

33. Verfahren zum Erzeugen von $N_t$ Pilotsequenzen aus einer ursprünglichen Pilotsequenz, wobei die $N_t$ Pilotsequenzen durch $N_t$ Sendepunkte gesendet werden sollen, wobei eine $\mu$.te Pilotsequenz der $N_t$ Pilotsequenz durch einen $\mu$-ten Sendepunkt von $N_t$ Sendepunkten gesendet werden soll, wobei das Verfahren die folgenden Schritte aufweist:

Zuweisen nachfolgender Werte der ursprünglichen Pilotsequenz zu jedem $D_f$-ten Teilträger eines Mehrträgermodulationsschemas unter Verwendung einer Anzahl von Teilträgern, um eine zugewiesene Sequenz zu erhalten;

Frequenz-Zeit-Umwandeln der zugewiesenen Sequenz in eine umgewandelte Sequenz;

Liefern einer $\mu$-ten Kopie der umgewandelten Sequenz;

zyklisches Verzögern der $\mu$-ten Kopie der umgewandelten Sequenz um einen Verzögerungswert, um die $\mu$-te Pilotsequenz zu erhalten,

**dadurch gekennzeichnet, dass** der Verzögerungswert von $D_f$ abhängig ist, oder **dadurch**, dass $D_f$ eine Pilotbeabstandung ist, die von dem Verzögerungswert abhängig ist, und

$$D_f \leq \frac{T}{N_T \max_{\mu}\left\{\tau_{\max}^{(\mu)}\right\}}$$

wobei T die OFDM-Symboldauer bezeichnet und wobei $\max_{\mu}\left\{\tau_{\max}^{(\mu)}\right\}$ eine maximale Verzögerung von $N_T$ überlagerten Kanälen ist, die durch das Gesamtmaximum der einzelnen maximalen Kanalverzögerungen bestimmt wird.

**34.** Computerprogramm, das einen Programmcode aufweist, der dahin gehend angepasst ist, das Verfahren gemäß Anspruch 30 oder 31 auszuführen, wenn der Programmcode auf einem Computer läuft.

## Revendications

**1.** Estimateur de canal configuré pour estimer une fonction de transfert d'un canal de transmission à partir d'un signal de réception comportant une séquence pilote pouvant être transmise d'un point de transmission à un point de réception via le canal de transmission, où la séquence pilote est conçue de sorte qu'une représentation spectrale de la séquence pilote est une séquence présentant un spectre, le spectre occupant une région spectrale passe-bande ayant une fréquence centrale prédéterminée, l'estimateur de canal comportant les caractéristiques suivantes:

un convertisseur temps-fréquence (101) destiné à convertir temps-fréquence le signal de réception, pour obtenir la représentation spectrale du signal de réception; et
un filtre passe-bande (103) ayant la fréquence centrale prédéterminée, le filtre passe-bande (103) étant configuré pour filtrer la représentation spectrale du signal de réception, pour obtenir un signal transformé filtré, où le signal transformé filtré comprend une estimation de la fonction de transfert de canal, où le filtre passe-bande (103) est opérationnel pour filtrer la représentation spectrale de sorte que dans le spectre de la représentation spectrale soit sortie la région spectrale passe-bande ayant la fréquence centrale prédéterminée.

**2.** Estimateur de canal selon la revendication 1, dans lequel le convertisseur temps-fréquence (101) comprend un transformateur de Fourier pour la conversion temps-fréquence du signal de réception.

**3.** Estimateur de canal selon l'une quelconque des revendications précédentes 1 à 2, dans lequel la séquence pilote résulte d'une conversion fréquence-temps d'une séquence de porteuses multiples, la séquence de porteuses multiples étant obtenue en attribuant des valeurs successives d'une séquence d'origine à chaque $D_f^{\text{ième}}$ sous-porteuse d'une pluralité de sous-porteuses successives d'un schéma de modulation de porteuses multiples, où le convertisseur temps-fréquence (101) comprend par ailleurs un sélecteur destiné à sélectionner chaque $D_f^{\text{ième}}$ valeur d'une version convertie temps-fréquence du signal de réception, pour obtenir la représentation spectrale du signal de réception.

**4.** Estimateur de canal selon la revendication 3, dans lequel la séquence d'origine comprend une séquence de brouillage, dans lequel le convertisseur temps-fréquence (101) comprend un multiplicateur destiné à multiplier la représentation spectrale du signal de réception par une version conjuguée complexe de la séquence de brouillage, pour fournir une séquence désembrouillée comme représentation spectrale du signal de réception.

**5.** Estimateur de canal selon les revendications 1 à 4, dans lequel la représentation spectrale du signal de réception est un ensemble de valeurs parallèles, dans lequel le convertisseur temps-fréquence (101) comprend un convertisseur parallèle-sériel destiné à fournir la représentation spectrale du signal de réception comme ensemble de valeurs sérielles.

**6.** Estimateur de canal selon l'une quelconque des revendications précédentes 1 à 5, dans lequel le filtre passe-bande est un filtre numérique comprenant une superposition d'un ensemble de coefficients pour la filtration passe-bande de la représentation spectrale du signal de réception, et un autre ensemble de coefficients pour la conversion vers le bas d'une version filtrée de la représentation spectrale en une région spectrale de bande de base, pour fournir le signal transformé filtré, dans lequel le signal transformé filtré est l'estimation de la fonction de transfert de canal.

**7.** Estimateur de canal selon l'une quelconque des autres revendications précédentes 1 à 6, dans lequel le signal transformé filtré est un signal passe-bande, et dans lequel l'estimateur de canal comprend un convertisseur vers le bas destiné à convertir vers le bas le signal transformé filtré en une région spectrale de bande de base, pour obtenir un signal converti vers le bas, dans lequel le signal converti vers le bas est l'estimation de la fonction de transfert de canal.

**8.** Estimateur de canal selon l'une quelconque des revendications précédentes 1 à 7, dans lequel le filtre passe-bande (103) est un filtre numérique comprenant un ensemble de coefficients de filtre pour la filtration passe-bande, dans lequel le filtre passe-bande (103) est accordable par rapport à la fréquence centrale prédéterminée, et dans lequel l'estimateur de canal comprend un moyen pour accorder le filtre passe-bande.

**9.** Estimateur de canal selon la revendication 8, dans lequel le moyen pour accorder le filtre passe-bande comprend un moyen pour fournir un ensemble de coefficients de filtre en fonction de la fréquence centrale prédéterminée.

**10.** Estimateur de canal selon la revendication 9, dans lequel le moyen pour fournir l'ensemble de coefficients de filtre est opérationnel pour calculer l'ensemble de coefficients de filtre en fonction de la fréquence centrale prédéterminée.

**11.** Estimateur de canal selon la revendication 9 ou 10, dans lequel le moyen pour fournir l'ensemble de coefficients de filtre comprend une mémoire de filtre destinée à mémoriser une pluralité d'ensembles de coefficients de filtre en fonction d'une pluralité de fréquences centrales prédéterminées.

**12.** Estimateur de canal selon l'une quelconque des revendications précédentes 1 à 11, dans lequel le filtre passe-bande (103) est utilisé par ailleurs pour interpoler entre des valeurs adjacentes du signal transformé filtré, pour fournir un signal transformé filtré interpolé en fréquence comme signal transformé filtré.

**13.** Estimateur de canal selon l'une quelconque des revendications précédentes 1 à 12, dans lequel le filtre passe-bande (103) est utilisé par ailleurs pour interpoler entre les valeurs correspondantes du signal transformé filtré à un premier moment et les valeurs d'un autre signal transformé filtré à un deuxième moment, pour obtenir un signal transformé filtré interpolé en temps comme signal transformé filtré.

**14.** Estimateur de canal selon l'une quelconque des autres revendications précédentes 1 à 13, dans lequel le signal de réception comporte une superposition de la séquence pilote et d'une autre séquence pilote pouvant être transmise d'un autre point de transmission au point de réception via un autre canal de transmission, dans lequel l'autre séquence pilote est conçue de sorte qu'une représentation spectrale de l'autre séquence pilote occupe une autre région spectrale ayant une autre fréquence centrale, dans lequel l'autre fréquence centrale est différente de la fréquence centrale prédéterminée, dans lequel l'estimateur de canal comprend par ailleurs un autre filtre ayant l'autre fréquence centrale prédéterminée destiné à filtrer la représentation spectrale du signal de réception, pour obtenir un autre signal transformé filtré, pour obtenir une estimation d'une autre fonction de transfert de canal de l'autre canal de transmission.

**15.** Estimateur de canal selon la revendication 14, dans lequel l'autre région spectrale est une région spectrale de bande de base, dans lequel l'autre filtre est un filtre passe-bas, et dans lequel l'autre signal transformé filtré est l'estimation de l'autre fonction de transfert de canal.

**16.** Estimateur de canal selon la revendication 14, dans lequel l'autre région spectrale est une autre région spectrale passe-bande, et dans lequel l'autre filtre est un autre filtre passe-bande ayant l'autre fréquence centrale prédéterminée différente de la fréquence centrale prédéterminée.

**17.** Estimateur de canal selon la revendication 16, comprenant par ailleurs un autre convertisseur vers le bas destiné à convertir vers le bas l'autre signal transformé filtré de l'autre région spectrale passe-bande en la région de bande de base, pour obtenir un autre signal converti vers le bas, dans lequel l'autre signal converti vers le bas est l'autre estimation de l'autre fonction de transfert de canal.

**18.** Estimateur de canal selon les revendications 14 à 17, comprenant par ailleurs un additionneur destiné à additionner le signal transformé filtré et l'autre signal transformé filtré, pour obtenir une estimation d'une fonction de transfert de canal effective comprenant une superposition de l'estimation de la fonction de transfert de canal et de l'estimation de l'autre fonction de transfert de canal.

**19.** Estimateur de canal selon les revendications 15 à 17, comprenant par ailleurs:

un convertisseur vers le haut destiné à convertir vers le haut l'estimation de la fonction de transfert de canal, pour obtenir une estimation de la fonction de transfert de canal dans la région spectrale passe-bande; et un additionneur destiné à additionner l'estimation de la fonction de transfert de canal et l'estimation de l'autre fonction de transfert de canal, pour obtenir une estimation d'une fonction de transfert de canal effective comprenant une superposition de l'estimation de la fonction de transfert de canal dans la région spectrale passe-bande et de l'estimation de l'autre fonction de transfert de canal.

**20.** Estimateur de canal selon la revendication 18 ou 19, dans lequel la séquence pilote résulte d'une conversion fréquence-temps d'une séquence de porteuses multiples, la séquence de porteuses multiples étant obtenue en attribuant des valeurs successives d'une séquence d'origine à chaque $D_f^{\text{ième}}$ sous-porteuse d'une pluralité de sous-porteuses successives, dans lequel l'estimation de la fonction de transfert de canal présente une erreur de phase fonction de $D_f$, et dans lequel l'estimateur de canal comprend un moyen pour corriger l'erreur de phase de l'estimation d'une fonction de transfert de canal, dans lequel le moyen pour corriger est opérationnel pour multiplier l'estimation de la fonction de transfert de canal par une séquence de phase.

**21.** Appareil pour générer $N_T$ séquences pilotes à partir d'une séquence pilote d'origine, les $N_T$ séquences pilotes étant à transmettre par $N_T$ points de transmission, dans lequel une $\mu^{\text{ième}}$ séquence pilote des $N_T$ séquences pilotes doit être transmise par un $\mu^{\text{ième}}$ point de transmission de $N_T$ points de transmission, l'appareil comprenant:

un attributeur (901) destiné à attribuer des valeurs successives de la séquence pilote d'origine à chaque $D_f^{\text{ième}}$ sous-porteuse d'un schéma de modulation de porteuses multiples à l'aide d'un nombre de sous-porteuses, pour obtenir une séquence attribuée; un convertisseur fréquence-temps (907) destiné à convertir la séquence attribuée en une séquence convertie; un moyen (909) pour fournir une $\mu^{\text{ième}}$ copie de la séquence convertie; un moyen (915) pour retarder de manière cyclique la $\mu^{\text{ième}}$ copie de la séquence convertie, pour obtenir la $\mu^{\text{ième}}$ séquence pilote;

**caractérisé par le fait que** le moyen (915) pour retarder de manière cyclique est opérationnel pour retarder de manière cyclique la $\mu^{\text{ième}}$ copie de la séquence convertie d'une valeur de retard qui est fonction de $D_f$, ou $D_f$ est un espacement pilote qui est fonction de la valeur de retard, et

$$D_f \leq \frac{T}{N_T \, \max_\mu \left\{ \tau_{\max}^{(\mu)} \right\}}$$

où T désigne la durée de symbole OFDM et où $\max_\mu \left\{ \tau_{\max}^{(\mu)} \right\}$ est un retard maximum de $N_T$ canaux superposés qui est déterminé par le maximum total des retards de canal maximaux individuels.

**22.** Appareil selon la revendication 21, dans lequel tous les canaux sont supposés avoir un retard maximum similaire $\tau_{\max} \approx \tau_{\max}^{(\mu)}$.

**23.** Appareil selon la revendication 21 ou 22, dans lequel le retard maximum est défini par

$$\tau_{\max} < \delta_{cyc}T_{spl}$$

où $T_{spl}$ désigne une durée d'échantillonnage et où $\delta_{cyc}$ désigne un paramètre de retard cyclique.

**24.** Appareil selon l'une des revendications 21 à 23, dans lequel le convertisseur temps-fréquence (907) présente une sortie couplée à une entrée du moyen (909) pour fournir la $\mu^{ième}$ copie de la séquence convertie.

**25.** Appareil selon l'une des revendications 21 à 24, dans lequel le moyen (909) pour fournir la $\mu^{ième}$ copie est opérationnel pour fournir la séquence convertie ou une copie de la séquence convertie comme première séquence pilote de $N_T$ séquences pilotes.

**26.** Appareil selon les revendications 21 à 25, dans lequel la séquence convertie est commune pour les $N_T$ séquences pilotes.

**27.** Appareil selon les revendications 21 à 26, dans lequel le moyen (915) destiné à retarder de manière cyclique est opérationnel pour retarder de manière cyclique la $\mu^{ième}$ copie de la séquence convertie d'un facteur de retard fonction de $D_f$, dans lequel le facteur de retard $\delta_{cyc}^{(\mu)}$ pour la $\mu^{ième}$ copie est obtenu à partir de l'équation suivante:

$$\delta_{cyc}^{(\mu)} = N_{FFT}\varphi(\mu) / 2\pi D_f(\mu - 1)$$

pour obtenir la $\mu^{ième}$ séquence pilote, où

$$\varphi(\mu)\bmod 2\pi \in \left\{0, \frac{2\pi}{N_T}, 2\cdot\frac{2\pi}{N_T}, ..., (N_T - 1)\cdot\frac{2\pi}{N_T}\right\}$$

et $N_{FFT}$ est le nombre de points d'une DFT inverse utilisée par le convertisseur fréquence-temps (907),
ou dans lequel l'attributeur (901) est opérationnel pour attribuer des valeurs successives de la séquence pilote d'origine à chaque $D_f^{ième}$ sous-porteuse, dans lequel $D_f$ est un espacement pilote fonction du facteur de retard, où $D_f$ est obtenu à partir de l'équation suivante:

$$D_f = \frac{kN_{FFT}}{N_T\delta_{cyc}}$$

où $k$ est choisi de sorte qu'un diviseur commun le plus grand GCD soit

$$GCD(k, N_T) = 1$$

**28.** Appareil selon les revendications 21 à 27, dans lequel le convertisseur temps-fréquence (907) est un seul transformateur de Fourier opérationnel pour effectuer une seule transformée de Fourier.

**29.** Appareil selon les revendications 21 à 28, dans lequel $D_f$ est pair, et dans lequel l'attributeur (901) est opérationnel pour attribuer des valeurs successives de la séquence pilote d'origine à chaque $D_f^{ième}$ sous-porteuse en commençant par une sous-porteuse de numéro impair à un premier moment, et pour attribuer les valeurs successives de la séquence pilote d'origine à chaque $D_f^{ième}$ sous-porteuse en commençant par une sous-porteuse de numéro pair à un deuxième moment suivant le premier moment, ou vice-versa.

**30.** Appareil selon les revendications 21 à 29, dans lequel le moyen (909) pour fournir la $\mu^{ième}$ copie comprend un multiplicateur (717) destiné à multiplier la $\mu^{ième}$ copie de la séquence convertie par un facteur de multiplication, pour fournir une copie multipliée comme $\mu^{ième}$ copie de la séquence convertie, où le facteur de multiplication est fonction d'un indice de numérotation associé à la $\mu^{ième}$ copie de la séquence convertie.

**31.** Appareil selon la revendication 30, dans lequel le multiplicateur (717) est opérationnel pour multiplier la $\mu^{ième}$ copie de la séquence convertie, pour obtenir la $\mu^{ième}$ séquence pilote à transmettre à un $l^{ième}$ moment par le facteur de multiplication

$$\alpha_1^{(\mu)} = e^{-j2\pi(\mu-1)/N_r\lfloor 1/D_r\rfloor}$$

où $D_t$ désigne un espacement de temps entre le $l^{ième}$ moment et un $(1+1)^{ième}$ moment.

**32.** Procédé pour estimer une fonction de transfert d'un canal de transmission à partir d'un signal de réception comportant une séquence pilote pouvant être transmise d'un point de transmission à un point de réception via le canal de communication, dans lequel la séquence pilote est conçue de sorte qu'une représentation spectrale de la séquence pilote soit une séquence présentant un spectre, le spectre occupant une région spectrale passe-bande ayant une fréquence centrale prédéterminée, le procédé comprenant les étapes suivantes consistant à:

convertir temps-fréquence le signal de réception, pour obtenir la représentation spectrale du signal de réception; et

filtrer passe-bande la représentation spectrale du signal de réception par rapport à la fréquence centrale prédéterminée, pour obtenir un signal transformé filtré, où le signal transformé filtré comprend une estimation de la fonction de transfert de canal, où le filtre passe-bande (103) est opérationnel pour filtrer la représentation spectrale de sorte que dans le spectre de la représentation spectrale soit sortie la région spectrale passe-bande ayant la fréquence centrale prédéterminée.

**33.** Procédé pour générer $N_t$ séquences pilotes à partir d'une séquence pilote d'origine, les $N_t$ séquences pilotes étant à transmettre par $N_t$ points de transmission, dans lequel une $\mu^{ième}$ séquence pilote des $N_t$ séquences pilotes doit être transmise par un $\mu^{ième}$ point de transmission de $N_t$ points de transmission, le procédé comprenant les étapes suivantes consistant à:

attribuer des valeurs successives de la séquence pilote d'origine à chaque $D_f^{ième}$ sous-porteuse d'un schéma de modulation de porteuses multiples à l'aide d'un nombre de sous-porteuses, pour obtenir une séquence attribuée;

convertir fréquence-temps la séquence attribuée, pour obtenir une séquence convertie;

fournir une $\mu^{ième}$ copie de la séquence convertie;

retarder de manière cyclique la $\mu^{ième}$ copie de la séquence convertie d'une valeur de retard, pour obtenir la $\mu^{ième}$ séquence pilote,

**caractérisé par le fait que** la valeur de retard est fonction de $D_f$, ou que $D_f$ est un espacement pilote qui est fonction de la valeur de retard, et

$$D_f \leq \frac{T}{N_T \max_\mu\left\{\tau_{\max}^{(\mu)}\right\}}$$

où T désigne la durée de symbole OFDM et où $\max_\mu\left\{\tau_{\max}^{(\mu)}\right\}$ est un retard maximum de $N_T$ canaux superposés qui est déterminé par le maximum total des retards de canal maximaux individuels.

**34.** Programme d'ordinateur ayant un code de programme adapté pour réaliser le procédé selon la revendication 30 ou 31 lorsque le code de programme est exécuté sur un ordinateur.

# FIG 1

Bandpass spectral region

Relative value

f'

Relative value

f

Filtered transformed signal

105

Relative value

t

Receive signal

Relative value

f

spectral representation of the receive signal

Time-frequency converter

101

103

BPF

Relative value

f'

Predetermined center frequency

EP 1 716 680 B1

43

Receive
signal

**FIG. 2a**

Relative value

t

spectral representation
of the receive signal

**FIG. 2b**

Relative value

f

**FIG. 2c**

spectrum of the spectral
representation of the receive signal

Further bandpass
spectral region

Bandpass spectral
region

Relative value

Further predetermined
center frequency

Predetermined
center frequency

f"

FIG 3

FIG 4A

FIG 4B

FIG 4C

EP 1 716 680 B1

FIG 5

subcarrier index i

| | |
|---|---|
| ▨ | Pilot |
| ▨ | i even |
| ☐ | i odd |

time l

FIG 6

subcarrier index i

$D_f$

$D_0$

| | |
|---|---|
| ▨ | Pilot |
| ▨ | i even |
| ☐ | i odd |

time l

# FIG 7

# FIG 8

# FIG 9

Origin pilot
sequence
[x(1), x(2), x(3)]

Information
sequence
[I(1), I(2), I(3),I(4),I(5)]

903

905

901

Assigner

Asigned
sequence

I(1)

X(1)

I(2)

I(3)

X(2)

I(4)

I(5)

X(3)

Frequency-time converter

907

909

911

913

$\delta_{cyc}$

915

First
pilotsequence

$\mu$-th
pilotsequence

EP 1 716 680 B1

## FIG 10

## FIG 11

# FIG 12

# FIG 13

## FIG 14

# FIG 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020034161 A1

- US 20020118771 A1

### Non-patent literature cited in the description

- **A. DAMMANN ; S. KAISER.** Standard Comformable Antenna Diversity Techniques for OFDM and its Application to the DVB-T System. *Proc. IEEE Global Telecommunication Conference (GLOBECOM 2001,* November 2001, 3100-3105
- **S. ABETA ; H. ATARASHI ; M. SAWAHASHI.** Performance of Coherent Multi-Carrier/DS-CDMA and MC-CDMA for Broadband Packet Wireless Access. *IEICE Transactions on Communications,* March 2001, vol. E84-B, 406-414
- **H. ATARASHI ; M. SAWAHASHI.** Variable Spreading Factor Orthogonal Frequency and Code Division Multiplexing (VSF-OFCDM. *3rd International Workshop on Multi-Carrier Spread, Spectrum, & Related Topics,* 2001
- **A. NAGUIB ; N. SESHADRI ; A. CALDERBANK.** Space Time Coding and Signal Processing for High Data Rate Wireless Communication. *IEEE Signal Processing Magazine,* May 2000, 76-92
- **A. WITTNEBEN.** A New Bandwidth Efficient Transmit Antenna Modulation Diversity Scheme for Linear Digital Modulation. *Proc. IEEE Int. Conference on Communications (ICC' 93,* May 1993, 1630-1634

- **G. BAUCH ; J. S. MALIK.** Parameter Optimization, Interleaving and Multiple Access in OFDM with Cyclic Delay Diversity. *Vehicular Technology Conference (VTC-spring 2004,* April 2004
- **A. DAMMANN ; S. KAISER.** Standard Conformable Antenna Diversity Techniques for OFDM and its Application to the DVB-T System. *Proc. IEEE Global Telecommunications Conference (GLOBECOM 2001,* November 2001, 3100-3105
- **W.C. JAKES.** Microwave Mobile Communications. Wiley, 1974
- **R. NILSSON ; O. EDFORS ; M. SANDELL ; P. BÖRJESSON.** An Analysis of Two-Dimensional Pilot-Symbol Assisted Modulation for OFDM. *Proc. IEEE Intern. Conf. On Personal Wireless Communications (ICPWC '97,* 1997, 71-74
- **P. HÖHER ; S. KAISER ; P. ROBERTSON.** Pilot-Symbol-Aided Channel Estimation in Time and Frequency. *Proc. Communication Theory Mini-Conference (CTMC) within IEEE Global Telecommunications Conference (GLOBECOM '97,* 1997, 90-96
- **Y. LI ; N. SESHADRI ; S. ARIYAVISITAKUL.** Channel Estimation for OFDM Systems with Transmitter Diversity in Mobile Wireless Channels. *IEEE Journal of Selected Areas on Communications,* March 1999, vol. 17, 461-470